# EUROPEAN PATENT SPECIFICATION

(11) **EP 3 450 710 B1**
(45) Date of publication and mention of the grant of the patent: **13.05.2020**
(21) Application number: 18191158.7
(22) Date of filing: 28.08.2018
(51) Int. Cl.: F01N 1/02, F01N 13/00, F01N 3/28

(54) **STRADDLED VEHICLE**
GRÄTSCHSITZFAHRZEUG
VÉHICULE À ENFOURCHER

(30) Priority: 28.08.2017 JP 2017163564
(43) Date of publication of application: 06.03.2019
(73) Proprietor: Yamaha Hatsudoki Kabushiki Kaisha, Iwata-shi Shizuoka 438-8501 (JP)
(72) Inventor: SOMA, Mitsuharu, Iwata-shi, Shizuoka 438-8501 (JP)
(74) Representative: Grünecker Patent- und Rechtsanwälte PartG mbB

(56) References cited:
- EP-A1- 0 500 105
- EP-A1- 3 064 722
- EP-A1- 3 165 730
- EP-A2- 1 898 062

## Description

The present invention relates to a straddled vehicle, in particular a straddled vehicle that includes a catalyst, housed in a silencer, and a sensor, detecting a state of exhaust gas that passed through the catalyst.

EP 3267004 A1 discloses a motorcycle, which is an example of a straddled vehicle. Another example of a stradded vehicle is given in EP 1898062 A2. With this motorcycle, a plurality of exhaust pipes, including a second exhaust pipe and a fourth exhaust pipe, are disposed inside a silencer. The second exhaust pipe is disposed upstream of the fourth exhaust pipe. Two catalysts that purify exhaust gas are disposed inside the second exhaust pipe. An oxygen sensor that detects oxygen concentration in exhaust gas is installed on a collar included in the fourth exhaust pipe.

With EP 3267004 A1, a distance from the catalysts to the oxygen sensor is long and a flow passage leading from the catalysts to the oxygen sensor is long. In this case, the silencer becomes large.

Specifically, if the catalysts and the oxygen sensor are aligned in an axial direction of the catalysts and the distance from the catalysts to the oxygen sensor is long, the silencer becomes large in the axial direction. If the catalysts and the oxygen sensor are not aligned in the axial direction of the catalysts and the distance from the catalysts to the oxygen sensor is long, an exhaust pipe guiding the exhaust gas from the catalysts to the oxygen sensor must be bent and a peripheral length (length of a periphery) of the silencer that houses the exhaust pipe becomes large. The silencer thus becomes large in the axial direction or a radial direction.

If the oxygen sensor is brought close to the catalysts in order to avoid enlargement of the silencer, the oxygen sensor is exposed to the exhaust gas of higher temperature that passed through the catalyst. In this case, a temperature of the oxygen sensor rises and approaches a limit temperature (upper limit value of temperature at which the sensor functions normally). Therefore, simply bringing the oxygen sensor close to the catalysts does not enable suppression of temperature rise of the oxygen sensor while avoiding enlargement of the silencer.

Thus, an object of the present invention is to provide a straddled vehicle that enables avoiding of enlargement of a silencer, in which a catalyst is housed, and enables suppression of temperature rise of a sensor that detects a state of exhaust gas that passed through the catalyst. According to the present invention, the present object is achieved by a straddled vehicle according to Claim 1. Preferred embodiments are laid down in the dependent claims.

A preferred embodiment of the present invention provides a straddled vehicle including an engine, a rear wheel, driven by the engine, a silencer disposed at a side of the rear wheel and reducing an exhaust noise generated when exhaust gas, discharged from the engine, is released to atmosphere, an exhaust pipe extending from the engine to the silencer and guiding the exhaust gas from the engine to the silencer, an upstream catalyst housed in the silencer and purifying the exhaust gas flowing through the silencer, and a downstream sensor disposed downstream of the upstream catalyst and detecting a state of the exhaust gas that passed through the upstream catalyst. The silencer includes a front pipe extending from the exhaust pipe to the upstream catalyst, a support pipe supporting the downstream sensor and guiding downstream the exhaust gas that passed through the upstream catalyst, and an outer cylinder surrounding the upstream catalyst and the support pipe. A distance in an axial direction of the upstream catalyst from the upstream catalyst to the downstream sensor is shorter than a length of the upstream catalyst in the axial direction of the upstream catalyst, and a cross-sectional area of the support pipe is greater than a cross-sectional area of the upstream catalyst.

With the present arrangement, the exhaust gas generated by combustion of fuel is guided from the engine to the silencer by the exhaust pipe. The upstream catalyst is housed in the silencer that is disposed at the side of the rear wheel. The exhaust gas flowing through the silencer is purified by the upstream catalyst. Cleanness of the exhaust gas discharged from the silencer is thereby enabled to be improved. Further, the state of the exhaust gas purified by the upstream catalyst is detected by the downstream sensor supported by the support pipe of the silencer. Degradation of the upstream catalyst is thereby enabled to be detected.

The downstream sensor is disposed close to the upstream catalyst. That is, the distance in the axial direction of the upstream catalyst from the upstream catalyst to the downstream sensor is shorter than the length of the upstream catalyst in the axial direction of the upstream catalyst. The silencer is thus enabled to be made compact in the axial direction of the upstream catalyst in comparison to a case where the distance from the upstream catalyst to the downstream sensor is long. A peripheral length (length of a periphery) of the silencer is enabled to be reduced because the downstream sensor is provided at the support pipe extending rearward from the upstream catalyst. The silencer is thereby enabled to be made compact.

Further, the upstream catalyst is not disposed in the exhaust pipe that guides the exhaust gas from the engine to the silencer but is disposed inside the outer cylinder of the silencer. A distance from the engine to the upstream catalyst is thereby increased, thus enabling a temperature of the exhaust gas flowing into the upstream catalyst to be decreased. Further, the cross-sectional area of the support pipe that supports the downstream sensor is greater than the cross-sectional area of the upstream catalyst. The exhaust gas that passed through the upstream catalyst expands inside the support pipe. The temperature of the exhaust gas thus decreases at the support pipe. The temperature of the exhaust gas contacting the downstream sensor is thus enabled to be decreased further. Temperature rise of the downstream sensor is thus enabled to be suppressed even if the downstream sensor is disposed close to the upstream catalyst.

The "distance in the axial direction of the upstream catalyst from the upstream catalyst to the downstream sensor" is, for example, the shortest distance in the axial direction of the upstream catalyst from the upstream catalyst to the downstream sensor. The same applies to a "distance in the axial direction of the upstream catalyst from the upstream catalyst to a downstream catalyst" to be described below. The cross-sectional area of the support pipe signifies a cross-sectional area of a flow passage of the support pipe. The same applies to the cross-sectional area of the upstream catalyst.

In the present preferred embodiment, at least one of the following features may be added to the straddled vehicle.

The support pipe includes an insertion hole in which the downstream sensor is inserted, and when viewed from the rear of the upstream catalyst in the axial direction of the upstream catalyst, the insertion hole is disposed outside a periphery of the upstream catalyst.

With the present arrangement, the downstream sensor is inserted in the insertion hole provided in the support pipe and projects inward in a radial direction of the upstream catalyst from the insertion hole. When the upstream catalyst and the support pipe are viewed from the rear in the axial direction of the upstream catalyst, the insertion hole is disposed outside the periphery of the upstream catalyst. That is, the flow passage of the support pipe projects outward in the radial direction of the upstream catalyst at the insertion hole. The exhaust gas that passed through the upstream catalyst is thereby enabled to expand at the support pipe.

Further, the insertion hole, in which the downstream sensor is inserted, is disposed in such a manner, so that the exhaust gas before expansion is unlikely to directly hit a pedestal portion in which the insertion hole is provided. Temperature rise of the pedestal portion is thus enabled to be suppressed and a heat amount transmitted from the pedestal portion to the downstream sensor is enabled to be decreased. The temperature rise of the downstream sensor is thereby enabled to be suppressed further and the temperature of the downstream sensor is enabled to be maintained at no more than a limit temperature.

The support pipe further includes the pedestal portion in which the insertion hole is provided, and the pedestal portion contacts the outer cylinder of the silencer.

With the present arrangement, the pedestal portion that supports the downstream sensor contacts the outer cylinder of the silencer. Movement of the pedestal portion with respect to the outer cylinder is restricted by the outer cylinder in contact with the pedestal portion. Vibration of the pedestal portion that supports the downstream sensor is thereby enabled to be reduced and the downstream sensor is enabled to be held more stably. Sensing capability of the downstream sensor is thus enabled to be stabilized further. Further, the pedestal portion contacts the outer cylinder that is directly hit by traveling wind and heat of the downstream sensor is thus enabled to be transmitted effectively to the outer cylinder. The temperature rise of the downstream sensor is thereby enabled to be suppressed further.

The pedestal portion contacts the outer cylinder at all positions inside an annular region surrounding the insertion hole.

With the present arrangement, the pedestal portion of the support pipe contacts the outer cylinder not just at a portion of the annular region surrounding the insertion hole but at all positions inside the region. The pedestal portion is thus enabled to be stabilized with respect to the outer cylinder in comparison to a case where the pedestal portion contacts the outer cylinder just at a portion of the annular region. Vibration of the downstream sensor supported by the pedestal portion is thereby enabled to be reduced further.

The straddled vehicle further includes a swing arm disposed between the rear wheel and the silencer in a vehicle width direction and supporting the rear wheel, and the silencer further includes a bracket fixed to each of the outer cylinder and the swing arm.

With the present arrangement, the outer cylinder of the silencer is supported by the swing arm via the bracket fixed to each of the outer cylinder and the swing arm. The pedestal portion of the support pipe that supports the downstream sensor contacts the outer cylinder. The downstream sensor is thus supported by the swing arm via the support pipe, the outer cylinder, and the bracket. The vibration of the downstream sensor is thus enabled to be reduced further.

The support pipe includes the pedestal portion provided with the insertion hole in which the downstream sensor is inserted, and the outer cylinder includes a penetrating hole which extends from an outer surface of the outer cylinder to an inner surface of the outer cylinder and in which the downstream sensor is inserted. The pedestal portion is exposed at the penetrating hole of the outer cylinder.

With the present arrangement, the downstream sensor and the pedestal portion supporting it are exposed at the penetrating hole penetrating through the outer cylinder in its thickness direction. Exposed portions of the downstream sensor and the pedestal portion contact the traveling wind that is lower in temperature than the exhaust gas. The downstream sensor and the pedestal portion are cooled by the traveling wind. Heat of the downstream sensor and the pedestal portion is thus enabled to be released efficiently to the atmosphere and the temperature rise of the downstream sensor is enabled to be suppressed further.

The outer surface of the outer cylinder includes a flat portion at which the penetrating hole opens.

With the present arrangement, the penetrating hole, penetrating through the outer cylinder in its thickness direction, opens at the flat portion provided at the outer surface of the outer cylinder. The traveling wind flows rearward along the outer surface of the outer cylinder. If the penetrating hole opens at a bottom surface of a recess provided at the outer surface of the outer cylinder, the traveling wind is unlikely to hit a portion of the downstream sensor positioned inside the recess. On the other hand, such a phenomenon does not occur if the penetrating hole opens at the flat portion of the outer surface of the outer cylinder. An exposed portion of the downstream sensor that projects outward from the penetrating hole of the outer cylinder is thus enabled to be cooled effectively by the traveling wind.

The downstream sensor includes a detecting portion provided with an inlet taking in the exhaust gas flowing through the silencer, and when viewed from the rear of the upstream catalyst in the axial direction of the upstream catalyst, the detecting portion of the downstream sensor overlaps with the upstream catalyst.

Most of the exhaust gas that passed through the upstream catalyst flows downstream in the axial direction of the upstream catalyst from the upstream catalyst. The detecting portion of the downstream sensor and the upstream catalyst are aligned in the axial direction of the upstream catalyst. When the upstream catalyst and the downstream sensor are viewed from the rear in the axial direction of the upstream catalyst, the detecting portion of the downstream sensor overlaps with the upstream catalyst. The exhaust gas immediately after passing through the upstream catalyst is thus likely to hit the detecting portion of the downstream sensor. The downstream sensor takes in the exhaust gas from the inlet, provided at the detecting portion that corresponds to being a tip portion, and detects the state of the exhaust gas. The state of the exhaust gas immediately after passing through the upstream catalyst is thereby enabled to be detected and the degradation of the upstream catalyst is enabled to be sensed with higher precision.

The straddled vehicle further includes a downstream catalyst housed in the silencer and disposed downstream of the upstream catalyst and the downstream sensor. The downstream catalyst overlaps with at least a portion of the upstream catalyst when viewed from the rear of the downstream catalyst in the axial direction of the upstream catalyst.

With the present arrangement, not just the upstream catalyst but the downstream catalyst is also housed in the silencer. The cleanness of the exhaust gas discharged from the silencer is thereby enabled to be improved further. Further, the upstream catalyst and the downstream catalyst are aligned in the axial direction of the upstream catalyst and when the upstream catalyst and the downstream catalyst are viewed from the rear in the axial direction of the upstream catalyst, the downstream catalyst overlaps with at least a portion of the upstream catalyst. The silencer is thus enabled to be made compact in the radial direction of the upstream catalyst in comparison to a case where the upstream catalyst and the downstream catalyst are not aligned in the axial direction of the upstream catalyst.

In addition, the downstream catalyst is disposed downstream of the upstream catalyst and the downstream sensor. In other words, the downstream sensor is disposed at a position downstream of the upstream catalyst and upstream of the downstream catalyst. Ordinarily, the temperature of the exhaust gas flowing into the upstream catalyst is higher than the temperature of the exhaust gas flowing into the downstream catalyst and a degradation rate of the upstream catalyst is faster than a degradation rate of the downstream catalyst. The degradation of the upstream catalyst is thereby enabled to be sensed early by disposing the downstream sensor between the upstream catalyst and the downstream catalyst in a flow direction of the exhaust gas.

A distance in the axial direction of the upstream catalyst from the upstream catalyst to the downstream catalyst is shorter than the length of the upstream catalyst in the axial direction of the upstream catalyst.

With the present arrangement, the downstream catalyst is disposed close to the upstream catalyst and an interval between the two catalysts (the upstream catalyst and the downstream catalyst) is narrow. That is, the distance in the axial direction of the upstream catalyst from the upstream catalyst to the downstream catalyst is shorter than the length of the upstream catalyst in the axial direction of the upstream catalyst. The interval between the two catalysts is thus narrow and therefore the two catalysts are enabled to be disposed inside the silencer while suppressing enlargement of the silencer in the axial direction of the upstream catalyst.

The support pipe includes an upstream end portion surrounding the upstream catalyst.

With the present arrangement, the upstream end portion of the support pipe surrounds the upstream catalyst. In this case, the upstream catalyst and the support pipe are enabled to be fixed to each other by welding the upstream end portion of the support pipe to an outer peripheral surface of the upstream catalyst or press-fitting the upstream catalyst in the upstream end portion of the support pipe. Or, the upstream catalyst and the support pipe are enabled to be fixed to each other by interposing a member of simple shape, such as a spacer, etc., between the upstream catalyst and the support pipe. A structure that fixes the upstream catalyst and the support pipe to each other is thus enabled to be simplified and the silencer is enabled to be made compact and lightweight.

The straddled vehicle further includes a downstream catalyst housed in the silencer and disposed downstream of the upstream catalyst and the downstream sensor. The support pipe further includes a downstream end portion surrounding the downstream catalyst.

With the present arrangement, not just the upstream catalyst but the downstream catalyst is also housed in the silencer. The exhaust gas that passed through the upstream catalyst is purified further by the downstream catalyst. The cleanness of the exhaust gas discharged from the silencer is thereby enabled to be improved further. Moreover, the downstream end portion of the support pipe surrounds the downstream catalyst. A structure that fixes the downstream catalyst and the support pipe to each other is thus enabled to be simplified and enlargement and weight increase of the silencer are enabled to be alleviated.

The straddled vehicle further includes a swing arm disposed between the rear wheel and the silencer in the vehicle width direction and supporting the rear wheel, and a lead wire connected to the downstream sensor and passing through an interval between the silencer and the swing arm in the vehicle width direction. The swing arm includes a housing recess housing a portion of the lead wire.

With the present arrangement, the swing arm that supports the rear wheel is disposed between the rear wheel and the silencer in the vehicle width direction. The lead wire that transmits a detection value (an electrical signal) of the downstream sensor passes through the interval between the silencer and the swing arm in the vehicle width direction. A portion of the lead wire is housed in the housing recess provided in the swing arm. A flying object, such as a pebble, etc., that flies toward the lead wire is blocked by the swing arm. A portion of the lead wire is thereby enabled to be protected by the swing arm.

The support pipe may include a cylindrical portion extending in the axial direction of the upstream catalyst, a projection projecting outward in the radial direction of the upstream catalyst from an outer peripheral surface of the cylindrical portion, and a pedestal portion provided at an outer end of the projection and provided with an insertion hole in which the downstream sensor is inserted.

With the present arrangement, the projection of the support pipe projects outward in the radial direction of the upstream catalyst from the outer peripheral surface of the cylindrical portion extending in the axial direction of the upstream catalyst. That is, the flow passage of the support pipe bulges at the projection. The temperature of the exhaust gas that passed through the upstream catalyst is thereby enabled to be decreased at the support pipe. Moreover, the pedestal portion supporting the downstream sensor is provided at the outer end of the projection and the exhaust gas before expansion is unlikely to contact the pedestal portion. The heat amount transmitted from the pedestal portion to the downstream sensor is thereby enabled to be decreased.

If the straddled vehicle further includes a swing arm disposed between the rear wheel and the silencer in the vehicle width direction and supporting the rear wheel, and the rear wheel is disposed at an inner side of the silencer in the vehicle width direction, the swing arm may include an overlapping portion positioned in front of the downstream sensor and overlapping with the downstream sensor when the swing arm is viewed from the front of the swing arm.

With the present arrangement, the overlapping portion of the swing arm is positioned in front of the downstream sensor. A flying object, such as a pebble, etc., that flies toward the downstream sensor is blocked by the overlapping portion of the swing arm. The downstream sensor is thereby enabled to be protected by the swing arm.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a schematic view of a right side of a scooter according to a preferred embodiment.
FIG. 2 is a schematic view of a right side of a frame included in the scooter.
FIG. 3 is a schematic view of a swing arm, an engine, and a rear wheel as viewed from above.
FIG. 4 is a schematic view of an outline of the engine and an arrangement associated therewith.
FIG. 5 is a schematic view of a right side of a silencer and the swing arm.
FIG. 6 is a schematic view of the silencer and the swing arm as viewed from above.
FIG. 7 is an exploded perspective view of the silencer as viewed from an inner side of the silencer in a vehicle width direction.
FIG. 8 is a sectional view of a vertical section of the silencer.
FIG. 9 is an enlarged sectional view magnifying a portion of FIG. 8.
FIG. 10 is a perspective view of a front pipe as viewed from the front.
FIG. 11 is a sectional view of a section of the silencer taken along line XI-XI shown in FIG. 8.
FIG. 12 is a view of the silencer as viewed in a direction of arrow XII shown in FIG. 11.
FIG. 13 is a sectional view for describing cross-sectional areas of an upstream catalyst and a support pipe.
FIG. 14 is a sectional view of a swing arm and a downstream sensor according to another preferred embodiment.

### DETAILED DESCRIPTION OF PREFERRED EMBODIMENTS

Front-rear, up-down, and right-left directions are defined on the basis of a viewpoint of a forward-facing rider who sits on a scooter 1 in a reference posture in which the scooter 1 travels straight ahead on a horizontal plane (in which a steering handle 8 is disposed at a straight-traveling position). The scooter 1 in the reference posture will be hereinafter described unless specific notice is given.

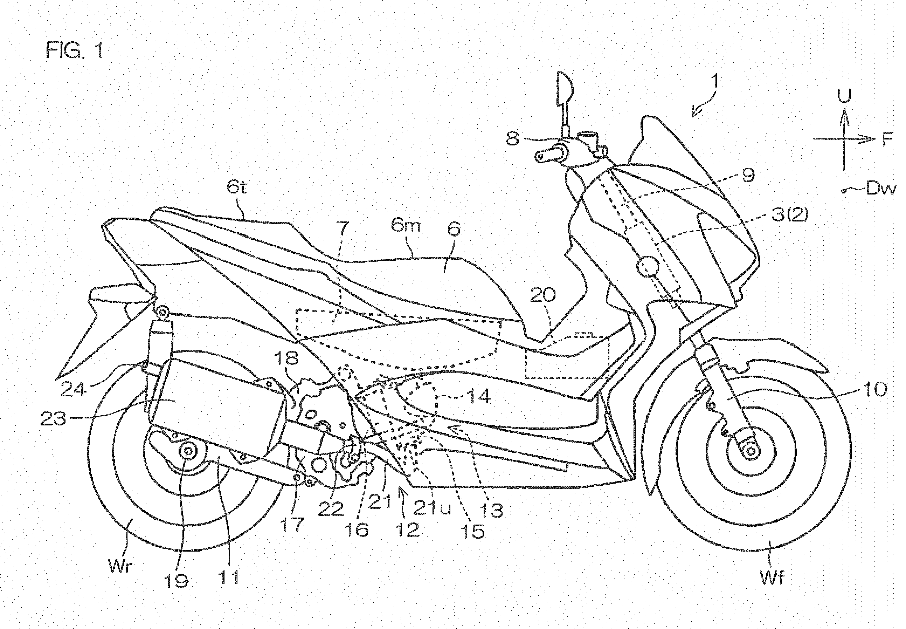

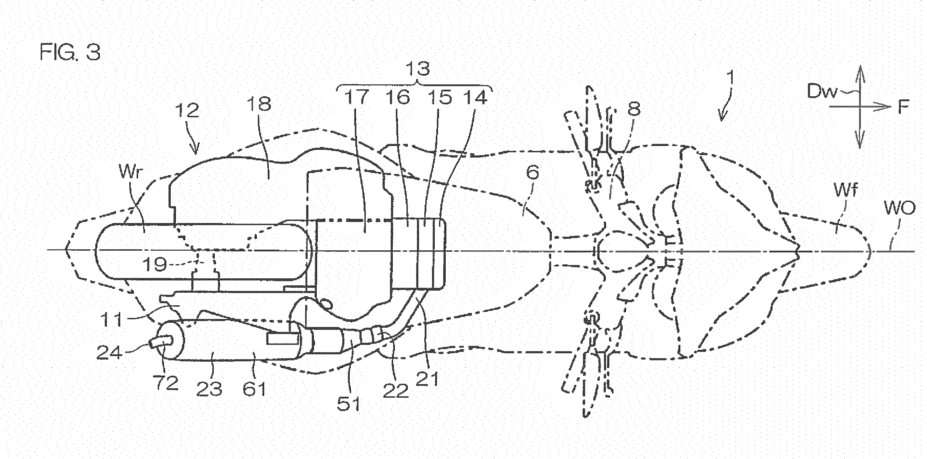

The right-left direction corresponds to a vehicle width direction Dw (a width direction of the scooter 1). A vehicle center WO (Fig. 3) corresponds to a vertical plane that passes through a center line of a head pipe 3 and that is perpendicular to a rotational center of a rear wheel Wr. "U" in Fig 1 represents an upper direction and "F" in Fig 1 represents a front direction. The same applies to other figures. A side view in the following description means a side view of the scooter 1, unless specific notice is given.

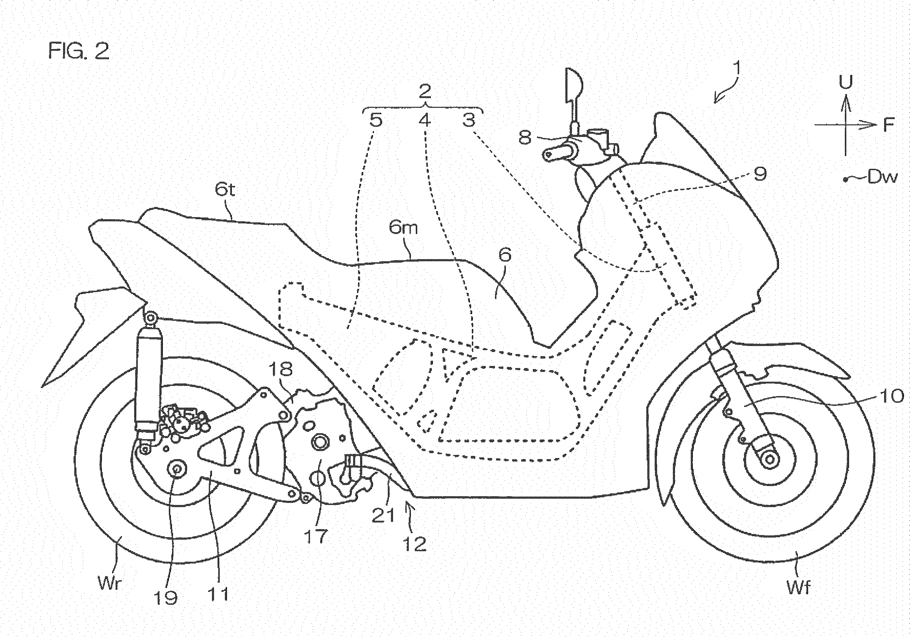

FIG. 1 is a schematic view of a right side of the scooter 1 according to the preferred embodiment. FIG. 2 is a schematic view of a right side of a frame 2 included in the scooter 1. FIG. 3 is a schematic view of a swing arm 11, an engine 13, and the rear wheel Wr as viewed from above. In FIG. 2, illustration of a silencer 23, etc., is omitted and the scooter 1 is simplified.

As shown in Fig. 1, the scooter 1, which is an example of a straddled vehicle, includes the frame 2 covered with an exterior cover. The frame 2 includes the head pipe 3 that extends obliquely rearward and upward. As shown in Fig. 2, the frame 2 further includes a main frame 4 that extends rearward and downward from the head pipe 3, and a rear frame 5 that extends rearward and upward from a rear end of the main frame 4.

As shown in FIG. 1, the scooter 1 includes a saddle type seat 6 on which a rider sits and a storage box 7 that is opened and closed by the seat 6. FIG. 1 shows an example in which a main seat 6m on which the rider sits and a tandem seat 6t on which a pillion passenger sits are provided at the seat 6. The seat 6 may be a seat for a single person. The seat 6 is turnable upward and downward with respect to the storage box 7 between a closed position (position shown in FIG. 1) at which an opening of the storage box 7 is closed by the seat 6 and an open position at which the opening of the storage box 7 is opened.

The scooter 1 includes the steering handle 8 to be steered by the rider and a front fork 10 rotatably supporting a front wheel Wf. The steering handle 8 is coupled to the front fork 10, which is an example of a front wheel supporting member. A steering shaft 9 of the front fork 10 is inserted into the head pipe 3. The steering handle 8 and the front fork 10 are turnable with respect to the frame 2 around a steering axis corresponding to the center line of the head pipe 3.

As shown in FIG. 3, the scooter 1 includes a swing unit 12, which generates a motive power that makes the scooter 1 travel, and the swing arm 11, rotatably supporting the rear wheel Wr together with the swing unit 12. The swing unit 12 includes the engine 13, driving the rear wheel Wr as a driving wheel, and a driving mechanism, transmitting the motive power of the engine 13 to the rear wheel Wr. The engine 13 is an internal combustion engine that generates the motive power by combustion of fuel. The engine 13 includes a head cover 14, a cylinder head 15, a cylinder body 16, and a crankcase 17.

The driving mechanism is a belt drive type speed reducing mechanism that transmits rotation of the engine 13 to the rear wheel Wr by an endless belt. The driving mechanism may be a chain drive type speed reducing mechanism that transmits the rotation of the engine 13 to the rear wheel Wr by an endless chain. The driving mechanism includes a drive pulley, driven by the engine 13, a driven pulley, to which rotation of the drive pulley is transmitted, and an endless V-belt, transmitting the rotation of the drive pulley to the driven pulley.

The driving mechanism further includes a belt case 18 housing the drive pulley, the V belt, and the driven pulley. A front end portion of the belt case 18 is disposed to the left of the crankcase 17. In FIG. 3, a boundary between the crankcase 17 and the belt case 18 is indicated by a thick alternate long and two short dashed line. The belt case 18 extends rearward from the crankcase 17. A rear end portion of the belt case 18 is disposed further to the rear than the crankcase 17.

The swing unit 12 is supported by the frame 2 via a pivot shaft extending in the vehicle width direction Dw. The swing arm 11 is fixed to the swing unit 12. The swing unit 12 and the swing arm 11 are turnable upward and downward around the pivot shaft with respect to the frame 2. The rear wheel Wr is disposed between the belt case 18 and the swing arm 11 in the vehicle width direction Dw. The rear wheel Wr is supported by the belt case 18 and the swing arm 11 via a rear axle shaft 19 extending from the belt case 18 to the swing arm 11.

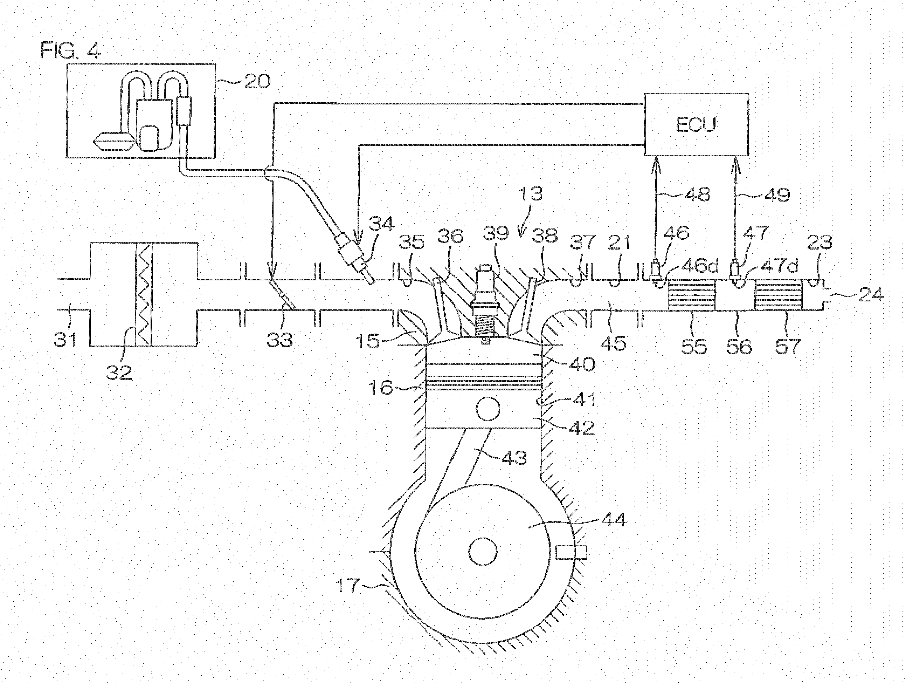

As shown in FIG. 1, the scooter 1 includes a fuel tank 20, storing the fuel supplied to the engine 13, and an exhaust system, releasing exhaust gas generated at the engine 13 to atmosphere. The exhaust system includes an exhaust pipe 21, guiding downstream exhaust gas discharged from an exhaust port 37 (see FIG. 4) of the engine 13, and a silencer 23, releasing the exhaust gas, guided by the exhaust pipe 21, to the atmosphere from an exhaust port 24.

An upstream end portion 21u of the exhaust pipe 21 is fixed to the cylinder head 15 by a bolt. An upstream end portion of the silencer 23 is fixed to a downstream end portion of the exhaust pipe 21 by a fastening band 22, surrounding the exhaust pipe 21 and the silencer 23. The silencer 23 is disposed to the right of the swing arm 11. The silencer 23 is fixed to the swing arm 11. The silencer 23 forms the exhaust port 24 that opens in air.

Next, an intake and exhaust system of the scooter 1 shall be described.

FIG. 4 is a schematic view of an outline of the engine 13 and an arrangement associated therewith. FIG. 4 shows an example where the engine 13 is a single cylinder engine. The engine 13 may be a multi-cylinder engine instead.

The engine 13 includes a piston 42, reciprocating inside a cylinder 41 in accompaniment with combustion of a gaseous mixture of air and the fuel, a crankshaft 44, converting the reciprocating motion of the piston 42 to rotation, and a connecting rod 43, transmitting the operation of the piston 42 to the crankshaft 44. The engine 13 further includes the cylinder body 16, forming the cylinder 41 that houses the piston 42, the cylinder head 15, forming a combustion chamber 40 in which the gaseous mixture is combusted, and the crankcase 17, housing the crankshaft 44 together with the cylinder body 16. The engine 13 further includes the head cover 14 (see FIG. 3), mounted to the cylinder head 15.

The scooter 1 includes an intake passage 31, guiding intake gas sucked into the combustion chamber 40, and an exhaust passage 45, guiding the exhaust gas discharged from combustion chamber 40. An intake port 35, extending from an outer surface of the cylinder head 15 to an inner surface of the combustion chamber 40 is a portion of the intake passage 31. The exhaust port 37, extending from an outer surface of the cylinder head 15 to an inner surface of the combustion chamber 40 is a portion of the exhaust passage 45. The intake port 35 is opened and closed by an intake valve 36. The exhaust port 37 is opened and closed by an exhaust valve 38. A spark plug 39 that ignites the gaseous mixture inside the combustion chamber 40 is inserted in the cylinder head 15.

The scooter 1 includes an air cleaner 32, removing foreign matter from the intake gas flowing through the intake passage 31 toward the combustion chamber 40, a throttle valve 33, changing a flow rate of the intake gas flowing from the air cleaner 32 to the combustion chamber 40, and a fuel supply device 34, supplying the fuel, supplied from the fuel tank 20, to the combustion chamber 40. The fuel supply device 34 may be either of a carburetor and a fuel injector. If the fuel supply device 34 is a fuel injector, the fuel supply device 34 may supply the fuel to the combustion chamber 40 via the intake passage 31 or may supply the fuel to the combustion chamber 40 directly.

The scooter 1 includes a purifying system that purifies the exhaust gas released to the atmosphere from the exhaust system that includes the exhaust pipe 21 and the silencer 23. The purifying system includes an upstream catalyst 55, purifying the exhaust gas discharged from the exhaust port 37 of the engine 13, and a downstream catalyst 57, purifying the exhaust gas purified by the upstream catalyst 55. The purifying system further includes an upstream sensor 46, detecting a state of the exhaust gas at a position upstream of the upstream catalyst 55, and a downstream sensor 47, detecting a state of the exhaust gas at a position downstream of the upstream catalyst 55 and upstream of the downstream catalyst 57.

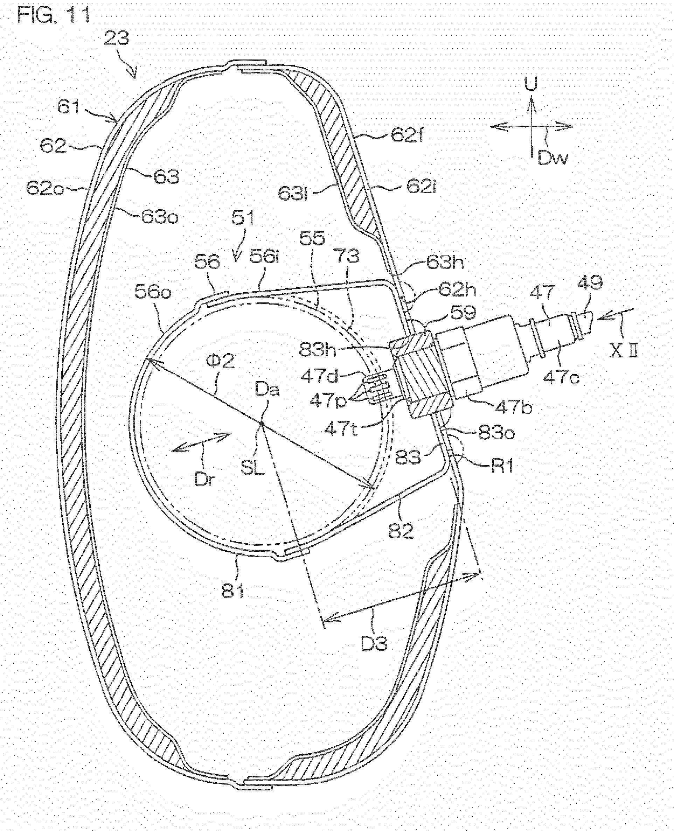

The upstream catalyst 55 and the downstream catalyst 57 are both three-way catalysts. The downstream catalyst 57 is disposed downstream of the upstream catalyst 55. The upstream catalyst 55 and the downstream catalyst 57 are disposed inside the silencer 23 that forms a portion of the exhaust passage 45. The upstream sensor 46 and the downstream sensor 47 are mounted to the silencer 23. A detecting portion 46d of the upstream sensor 46 that is provided with an inlet taking in the exhaust gas is disposed inside the silencer 23. Similarly, a detecting portion 47d of the downstream sensor 47 that is provided with an inlet 47p (see FIG. 11) taking in the exhaust gas is disposed inside the silencer 23.

Each of the upstream sensor 46 and the downstream sensor 47 is an oxygen sensor detecting an oxygen concentration in the exhaust gas. A detection value of the upstream sensor 46 is transmitted to an ECU (electronic control unit) via an upstream lead wire 48 extending from the upstream sensor 46 toward the ECU. Similarly, a detection value of the downstream sensor 47 is transmitted to the ECU via a downstream lead wire 49 extending from the downstream sensor 47 toward the ECU. The ECU changes an air-fuel ratio based on the detection value of the upstream sensor 46. The ECU diagnoses the upstream catalyst 55 based on the detection value of the downstream sensor 47.

The silencer 23, which is a portion of the exhaust system, shall now be described.

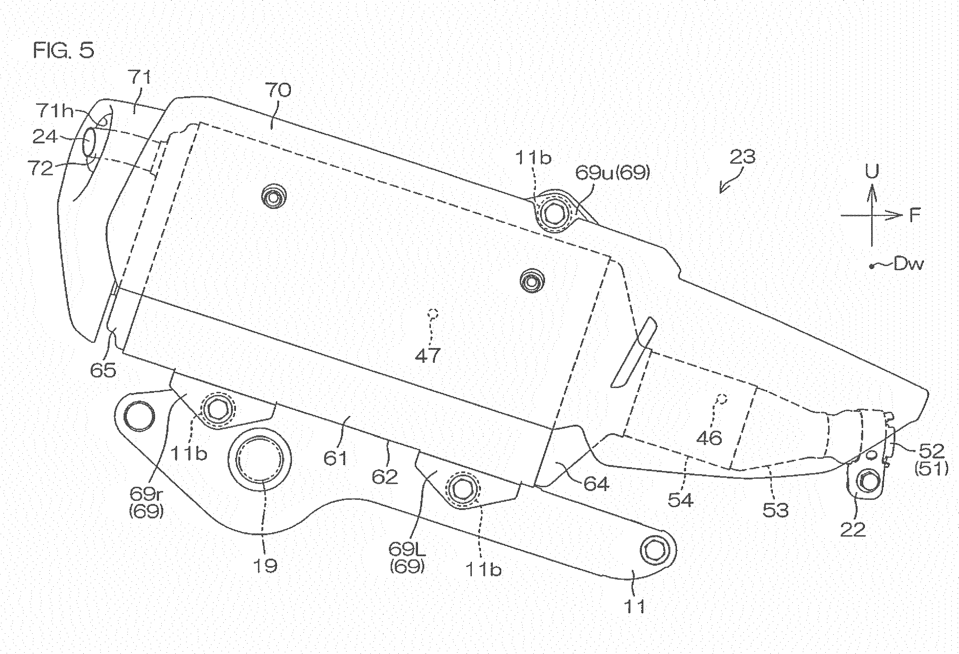

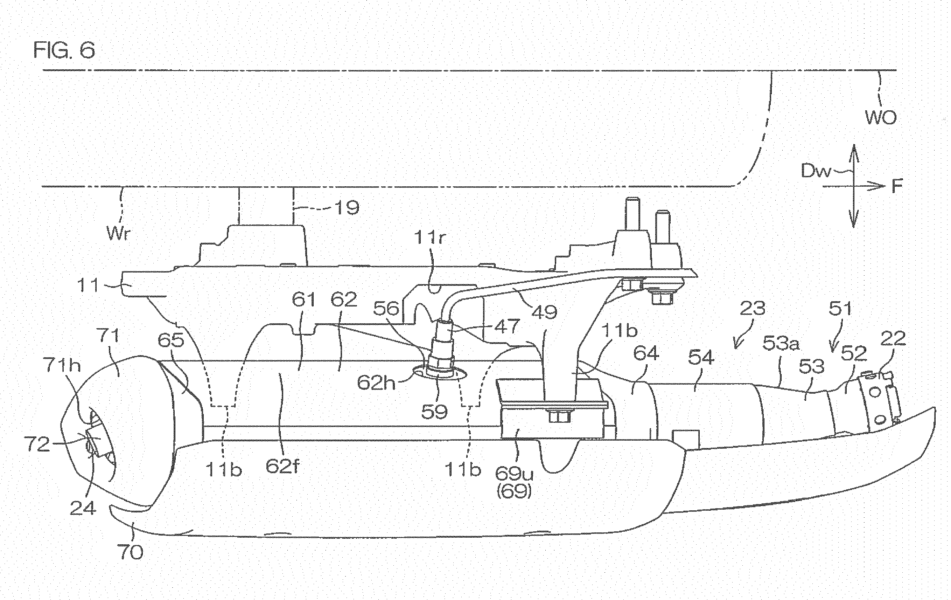

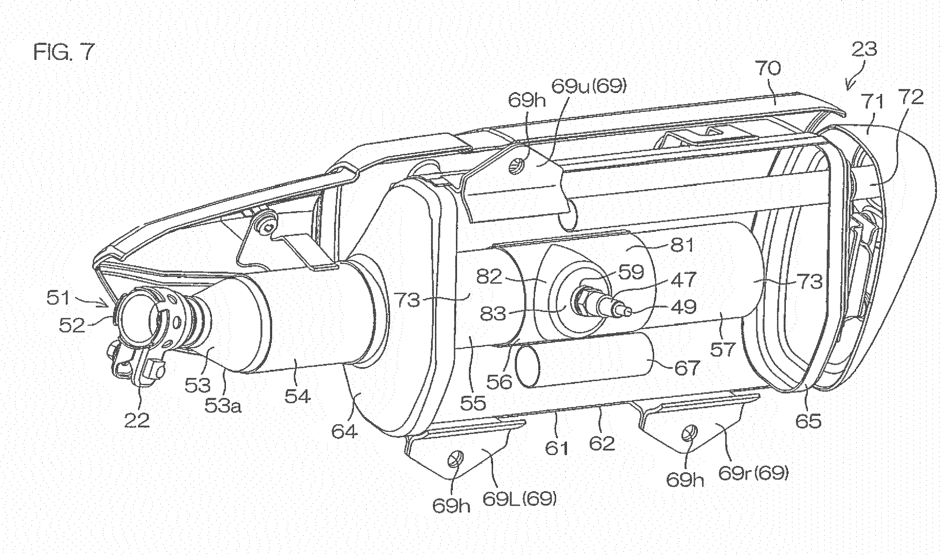

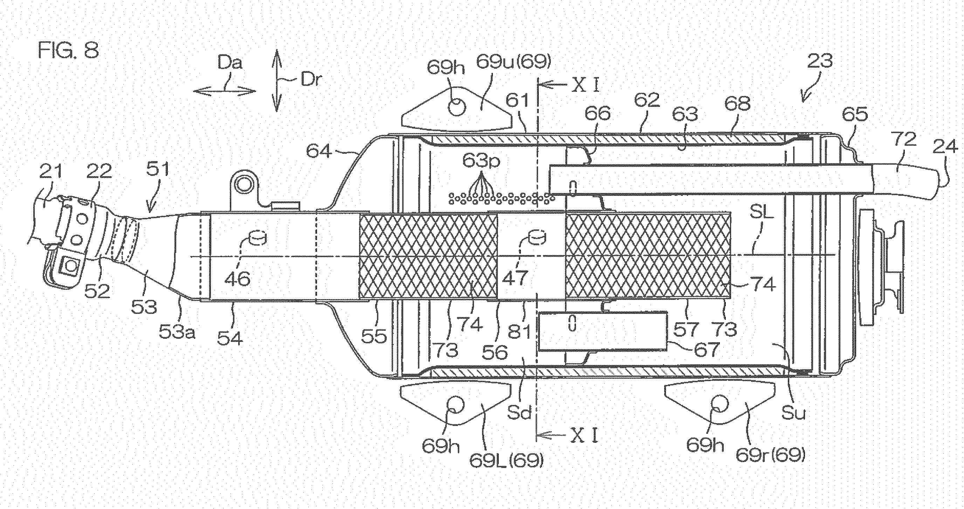

FIG. 5 is a schematic view of a right side of the silencer 23 and the swing arm 11. FIG. 6 is a schematic view of the silencer 23 and the swing arm 11 as viewed from above. FIG. 7 is an exploded perspective view of the silencer 23 as viewed from an inner side of the silencer 23 in the vehicle width direction Dw. FIG. 8 is a sectional view of a vertical section of the silencer 23. Although the silencer 23 is inclined obliquely with respect to the horizontal plane, it is drawn in FIG. 8 such that a center line (straight line SL) of a front pipe 51 extends in the right-left direction of FIG. 8.

As shown in FIG. 5 and FIG. 6, the silencer 23 is disposed to the right of the swing arm 11 and overlaps with the swing arm 11 in side view. As shown in FIG. 7, the silencer 23 includes the front pipe 51, guiding downstream the exhaust gas discharged from the exhaust pipe 21, an expansion portion 61, making the exhaust gas, guided by the front pipe 51, expand, and a rear pipe 72, releasing the exhaust gas inside the expansion portion 61 to the atmosphere. The silencer 23 further includes a plurality of brackets 69, fixed to the expansion portion 61, a side cover 70, disposed to the right of the expansion portion 61, and an end cover 71, disposed to the rear of the expansion portion 61.

As shown in FIG. 8, the front pipe 51 includes a joint pipe 52, fastened by the fastening band 22, a tapered pipe 53, extending downstream from the joint pipe 52, and a straight pipe 54, extending downstream from the tapered pipe 53. The front pipe 51 is continuous from the exhaust pipe 21 to the upstream catalyst 55. The upstream catalyst 55 extends rearward in an axial direction of the upstream catalyst 55 from the straight pipe 54 and a support pipe 56 extends rearward in the axial direction of the upstream catalyst 55 from the upstream catalyst 55. The downstream catalyst 57 extends rearward in the axial direction of the upstream catalyst 55 from the support pipe 56.

The expansion portion 61 includes an inner cylinder 63, surrounding the upstream catalyst 55, the support pipe 56, and the downstream catalyst 57, an outer cylinder 62, surrounding the upstream catalyst 55, the support pipe 56, and the downstream catalyst 57 via the inner cylinder 63, a front cap 64, closing an annular space between the front pipe 51 and the outer cylinder 62, and a rear cap 65, closing an annular space between the rear pipe 72 and the outer cylinder 62. The expansion portion 61 further includes a separator 66, partitioning a space inside the expansion portion 61 into an upstream expansion space Su and a downstream expansion portion Sd aligned in the axial direction Da of the upstream catalyst 55, and an intermediate pipe 67, extending from the upstream expansion space Su to the downstream expansion space Sd, via the separator 66.

A sound absorbent 68 that reduces exhaust noise is disposed in an annular space between the outer cylinder 62 and the inner cylinder 63. The sound absorbent 68 may be glass wool or steel wool or may be a material besides these. The sound absorbent 68 is disposed between a front end portion 63 of the inner cylinder 63 and a rear end portion of the inner cylinder 63. The sound absorbent 68 closes a plurality of sound absorbing ports 63p penetrating through the inner cylinder 63 in its thickness direction. Although just a portion of the sound absorbing ports 63p are shown in FIG. 8, the plurality of sound absorbing ports 63p are disposed regularly across an entire periphery of the inner cylinder 63.

The inner cylinder 63 of the expansion portion 61 surrounds the intermediate pipe 67, the separator 66, and the rear pipe 72 in addition to the upstream catalyst 55, the support pipe 56, and the downstream catalyst 57. An outer peripheral portion of the separator 66 contacts an inner peripheral surface of the inner cylinder 63. The intermediate pipe 67 passes through the separator 66 in the axial direction Da of the upstream catalyst 55. The separator 66 contacts an outer peripheral surface of the intermediate pipe 67. An upstream end of the intermediate pipe 67 is disposed to the rear of a downstream end of the intermediate pipe 67. The upstream expansion space Su is disposed to the rear of the downstream expansion space Sd. The upstream end of the intermediate pipe 67 is disposed in the upstream expansion space Su and the downstream end of the intermediate pipe 67 is disposed in the downstream expansion space Sd.

The expansion portion 61 is larger than the front pipe 51 and the rear pipe 72. A peripheral length (length of a periphery) of the expansion portion 61, that is, a peripheral length of the outer cylinder 62 is longer than a peripheral length of the front pipe 51 and longer than a peripheral length of the rear pipe 72. The front pipe 51 projects forward from the expansion portion 61. The rear pipe 72 projects rearward from the expansion portion 61. A downstream end of the downstream catalyst 57 is disposed in the upstream expansion space Su. An upstream end of the rear pipe 72 is disposed in the downstream expansion space Sd. The front pipe 51, the rear pipe 72, and the intermediate pipe 67 are separated in a radial direction Dr of the upstream catalyst 55. The rear pipe 72 is disposed higher than the front pipe 51. The intermediate pipe 67 is disposed lower than the front pipe 51.

The front pipe 51 passes through the front cap 64 in the axial direction Da of the upstream catalyst 55. The front cap 64 contacts an outer peripheral surface of the straight pipe 54. The separator 66 contacts an outer peripheral surface of the support pipe 56. The rear pipe 72 passes through the downstream expansion space Sd, the separator 66, and the rear cap 65 in the axial direction Da of the upstream catalyst 55. The separator 66 and the rear cap 65 contacts an outer peripheral surface of the rear pipe 72. A downstream end of the rear pipe 72 is disposed in a space to the rear of the expansion portion 61. As shown in FIG. 5 and FIG. 6, the downstream end of the rear pipe 72 is inserted in an end hole 71h penetrating through the end cover 71 in the axial direction Da of the upstream catalyst 55. The downstream end of the rear pipe 72 forms the exhaust port 24.

The exhaust gas generated by the combustion of the gaseous mixture is discharged from the combustion chamber 40 to the exhaust pipe 21 via the exhaust port 37 (see FIG. 4) and guided by the front pipe 51 to the upstream catalyst 55. Thereafter, the exhaust gas passes through the upstream catalyst 55, the support pipe 56, and the downstream catalyst 57 in that order and flows into the upstream expansion space Su. Thereafter, the exhaust gas flows from the upstream expansion space Su to the downstream expansion space Sd via the intermediate pipe 67 and is released to the atmosphere from the rear pipe 72. Energy of the exhaust gas decreases while it flows through the expansion portion 61. The exhaust noise is thereby reduced. Further, the exhaust gas is purified by the upstream catalyst 55 and the downstream catalyst 57, thereby enabling reduction of pollutants released to the atmosphere.

The expansion portion 61 is fixed to the swing arm 11 via the plurality of brackets 69. As shown in FIG. 8, the plurality of brackets 69 include an upper bracket 69u, extending upward from the expansion portion 61, a lower bracket 69L, extending downward from the expansion portion 61, and a rear bracket 69r, extending downward from the expansion portion 61. The upper bracket 69u is disposed higher than the lower bracket 69L and the rear bracket 69r, The rear bracket 69r is disposed further to the rear than the upper bracket 69u and the lower bracket 69L. Each of the brackets 69 is fixed to the outer cylinder 62 by welding.

As shown in FIG. 5 and FIG. 6, the swing arm 11 includes a plurality of bosses 11b protruding outward in the vehicle width direction Dw. The upper bracket 69u, the lower bracket 69L, and the rear bracket 69r are respectively overlapped with three bosses 11b. Shaft portions of bolts are inserted in through holes 69h (see FIG. 7), penetrating through the brackets 69 in the vehicle width direction Dw, and mounted in female screw holes provided in the bosses 11b. The respective brackets 69 are thereby fixed to the swing arm 11 and the silencer 23 is supported by the swing arm 11.

Next, the upstream catalyst 55, the support pipe 56, and the downstream catalyst 57 shall mainly be described.

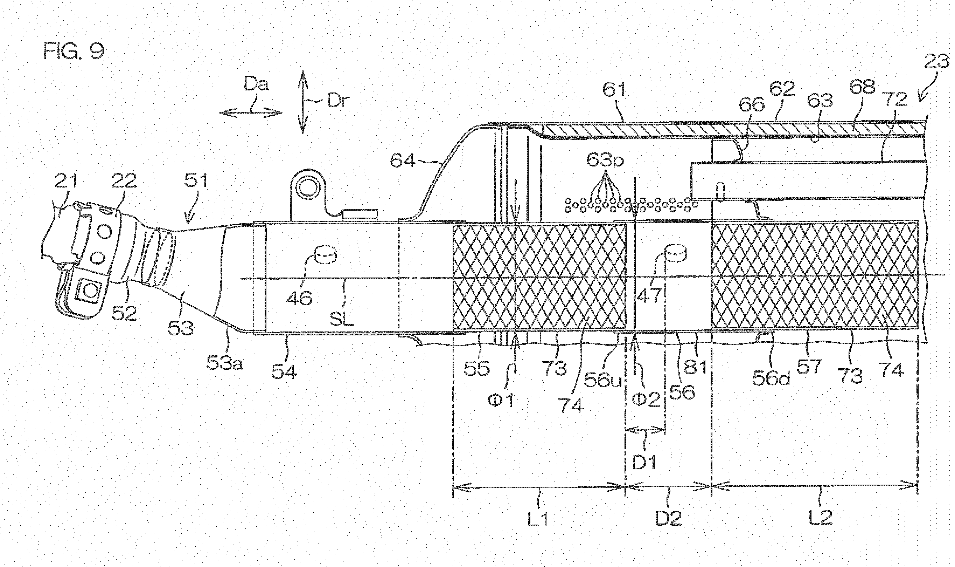

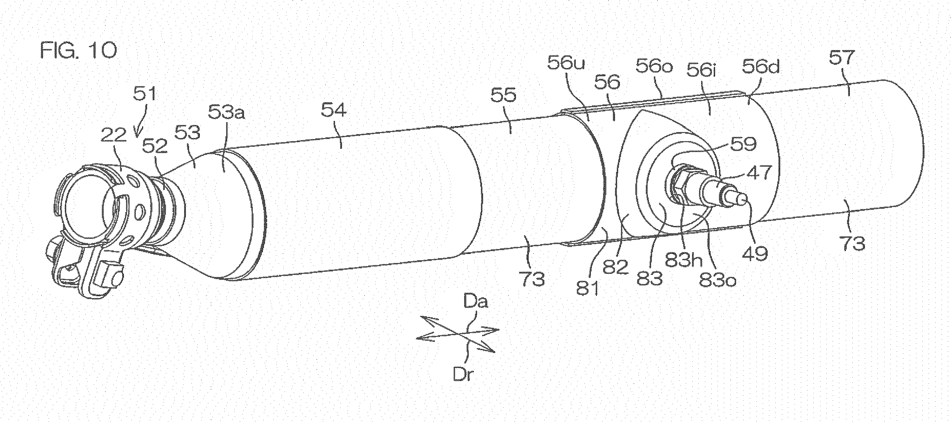

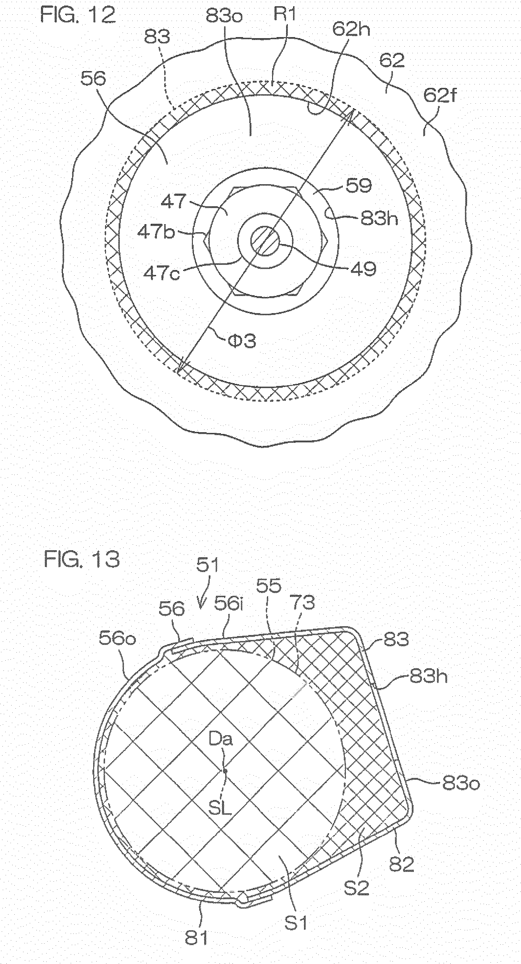

FIG. 9 is an enlarged sectional view magnifying a portion of FIG. 8. FIG. 10 is a perspective view of the front pipe 51 as viewed from the front. FIG. 11 is a sectional view of a section of the silencer 23 taken along line XI-XI shown in FIG. 8. FIG. 11 shows a section orthogonal to a center line of the support pipe 56. FIG. 12 is a view of the silencer 23 as viewed in a direction of arrow XII shown in FIG. 11. FIG. 13 is a sectional view for describing cross-sectional areas of the upstream catalyst 55 and the support pipe 56. FIG. 11 and FIG. 13 are views viewing the upstream catalyst 55, etc., from the rear in the axial direction Da of the upstream catalyst 55.

As shown in FIG. 9, the front pipe 51 includes the joint pipe 52, the tapered pipe 53, and the straight pipe 54. The upstream sensor 46 is mounted to the straight pipe 54 via an upstream nut fixed to the straight pipe 54. The downstream sensor 47 is mounted to the support pipe 56 via a downstream nut 59 (see FIG. 10) fixed to the support pipe 56.

The tapered pipe 53 includes a tapered portion 53a that increases in outer diameter and inner diameter as the straight pipe 54 is approached. An upstream end portion of the straight pipe 54 surrounds a downstream end portion of the tapered pipe 53. An outer diameter and an inner diameter of the straight pipe 54 are constant from the upstream end portion of the straight pipe 54 to a downstream end of the straight pipe 54. A downstream end portion of the straight pipe 54 surrounds an upstream end portion of the upstream catalyst 55. The straight pipe 54, the upstream catalyst 55, the support pipe 56, and the downstream catalyst 57 are aligned in the axial direction Da of the upstream catalyst 55 and center lines of these components are disposed on the same straight line SL.

The upstream catalyst 55 and the downstream catalyst 57 are separated from each other and face each other in the axial direction Da of the upstream catalyst 55. The upstream catalyst 55 includes a circular columnar carrier, provided with a plurality of passages penetrating through the upstream catalyst 55 in the axial direction Da of the upstream catalyst 55, and a catalyst material, held on inner surfaces of the carrier. Similarly, the downstream catalyst 57 includes a circular columnar carrier, provided with a plurality of passages penetrating through the downstream catalyst 57 in an axial direction of the downstream catalyst 57 matching the axial direction Da of the upstream catalyst 55, and a catalyst material, held on inner surfaces of the carrier. Each carrier includes a circular cylindrical outer case 73, extending in the axial direction Da of the upstream catalyst 55, and a honeycomb-shaped content 74, held inside the outer case 73. The catalyst material is held on surfaces of the content 74.

An outer diameter of the outer case 73 of the upstream catalyst 55 corresponds to an outer diameter Φ1 of the upstream catalyst 55. Similarly, an outer diameter of the outer case 73 of the downstream catalyst 57 also corresponds to an outer diameter of the downstream catalyst 57. The outer diameter Φ1 of the upstream catalyst 55 is equal to the outer diameter of the downstream catalyst 57. The outer diameter Φ1 of the upstream catalyst 55 may be less or greater than the outer diameter of the downstream catalyst 57. The upstream catalyst 55 is shorter in the axial direction Da of the upstream catalyst 55 than the downstream catalyst 57. In other words, a length L1 of the upstream catalyst 55 in the axial direction Da of the upstream catalyst 55 is shorter than a length L2 of the downstream catalyst 57 in the axial direction Da of the upstream catalyst 55. The length L1 of the upstream catalyst 55 may be equal to or longer than the length L2 of the downstream catalyst 57.

The support pipe 56 includes a cylindrical portion 81 extending in the axial direction Da of the upstream catalyst 55. An upstream end portion of the cylindrical portion 81 corresponding to an upstream end portion 56u of the support pipe 56 surrounds a downstream end portion of the upstream catalyst 55. A downstream end portion of the cylindrical portion 81 corresponding to a downstream end portion 56d of the support pipe 56 surrounds an upstream end portion of the downstream catalyst 57. An outer diameter Φ2 and an inner diameter of the cylindrical portion 81 are constant from an upstream end of the cylindrical portion 81 to a downstream end of the cylindrical portion 81. The outer diameter Φ2 of the cylindrical portion 81 does not have to be constant from the upstream end of the cylindrical portion 81 to the downstream end of the cylindrical portion 81. The same applies to the inner diameter of the cylindrical portion 81.

The support pipe 56 is made of metal. Similarly, the straight pipe 54 is also made of metal and the outer cases 73 of the upstream catalyst 55 and the downstream catalyst 57 are also made of metal. The outer case 73 of the upstream catalyst 55 is fixed to the straight pipe 54 and the support pipe 56 by welding. The outer case 73 of the downstream catalyst 57 is fixed to the support pipe 56 by welding. The upstream nut, by which the upstream sensor 46 is mounted, is fixed to the straight pipe 54 by welding. The downstream nut 59, by which the downstream sensor 47 is mounted, is fixed to the support pipe 56 by welding.

As shown in FIG. 10, the support pipe 56 includes, in addition to the cylindrical portion 81, a cylindrical projection 82, projecting outward in the radial direction Dr of the upstream catalyst 55 from an outer peripheral surface of the cylindrical portion 81, and a pedestal portion 83, supported by the projection 82. The pedestal portion 83 is, for example, disk-shaped. The pedestal portion 83 supports the downstream sensor 47 via the downstream nut 59. The projection 82 is disposed between the upstream end of the cylindrical portion 81 and the downstream end of the cylindrical portion 81.

As shown in FIG. 11, the projection 82 projects toward the outer cylinder 62 from the cylindrical portion 81. The pedestal portion 83 closes an outer end of the projection 82 corresponding to a tip of the projection 82. An outer diameter and an inner diameter of the projection 82 decrease as the pedestal portion 83 is approached. An outer diameter Φ3 (see FIG. 12) of the pedestal portion 83 is less than the outer diameter Φ2 of the cylindrical portion 81. A distance D3 in the radial direction Dr of the upstream catalyst 55 from a center line of the cylindrical portion 81, corresponding to the center line (straight line SL) of the support pipe 56, to the pedestal portion 83 is greater than a radius of an outer peripheral surface of the upstream catalyst 55 (1/2 of the outer diameter Φ1 of the upstream catalyst 55) and less than a diameter of the outer peripheral surface of the upstream catalyst 55 (the outer diameter Φ1 of the upstream catalyst 55). The pedestal portion 83 is disposed close to the cylindrical portion 81 and therefore the expansion portion 61, housing the support pipe 56, is enabled to be suppressed from being enlarged in the radial direction Dr of the upstream catalyst 55.

A cross-hatched region S1 and a crossed-hatched region S2 in FIG. 13 indicate spaces that are surrounded by the support pipe 56. That is, the cylindrical portion 81, the projection 82, and the pedestal portion 83 of the support pipe 56 surround both the region S1 and the region S2. A sum of an area of the region S1 and an area of the region S2 corresponds to the cross-sectional area of the support pipe 56. The area of the region S1 corresponds to the cross-sectional area of the upstream catalyst 55. Therefore, the cross-sectional area of the support pipe 56 is greater than the cross-sectional area of the upstream catalyst 55 by just the amount of the area of the region S2.

As shown in FIG. 11, the downstream sensor 47 and the downstream nut 59 are inserted in an insertion hole 83h penetrating through the pedestal portion 83 in its thickness direction. The downstream nut 59 is fixed to the pedestal portion 83 by welding. The downstream sensor 47 is inserted from outside of the support pipe 56 into the downstream nut 59. A male screw, provided on an outer periphery of a male screw portion 47t of the downstream sensor 47, is engaged with a female screw provided on an inner periphery of the downstream nut 59. The downstream sensor 47 is thereby fixed to the downstream nut 59.

The downstream nut 59 projects inward and outward in the radial direction Dr of the upstream catalyst 55 from the insertion hole 83h. The detecting portion 47d of the downstream sensor 47 provided with the inlet 47p taking in the exhaust gas projects inward in the radial direction Dr of the upstream catalyst 55 from the downstream nut 59. When the upstream catalyst 55 is viewed from the rear in the axial direction Da of the upstream catalyst 55, the pedestal portion 83, the insertion hole 83h, and the downstream nut 59 are disposed outside a periphery of the upstream catalyst 55. On the other hand, the detecting portion 47d of the downstream sensor 47 overlaps with the upstream catalyst 55.

As shown in FIG. 9, a distance D1 in the axial direction Da of the upstream catalyst 55 from the upstream catalyst 55 to the downstream sensor 47 is shorter than the length L1 of the upstream catalyst 55 in the axial direction Da of the upstream catalyst 55. Further, the distance D1 is shorter than the outer diameter Φ1 of the upstream catalyst 55. An interval between the upstream catalyst 55 and the downstream catalyst 57, that is, a distance D2 in the axial direction Da of the upstream catalyst 55 from the upstream catalyst 55 to the downstream catalyst 57 is shorter than the length L1 of the upstream catalyst 55 and shorter than the outer diameter Φ1 of the upstream catalyst 55.

As shown in FIG. 11, the support pipe 56 includes a plurality of members aligned in a peripheral direction of the upstream catalyst 55. FIG. 11 shows an example where the support pipe 56 is provided with an outer member 56o and an inner member 56i that are mutually combined. The support pipe 56 may include three or more separate members or may be single, integral member. The outer member 56o is disposed outward of the inner member 56i in the vehicle width direction Dw. The outer member 56o is recessed outward in the vehicle width direction Dw and the inner member 56i is recessed inward in the vehicle width direction Dw. The projection 82 and the pedestal portion 83 are provided at the inner member 56i.

As with the support pipe 56, the outer cylinder 62 includes a plurality of members aligned in a peripheral direction of the outer cylinder 62 and the inner cylinder 63 includes a plurality of members aligned in a peripheral direction of the inner cylinder 63. FIG. 11 shows an example where the outer cylinder 62 is provided with an outer member 62o and an inner member 62i that are mutually combined and the inner cylinder 63 is provided with an outer member 63o and an inner member 63i that are mutually combined. The outer cylinder 62 may include three or more separate members or may be single, integral member. The same applies to the inner cylinder 63.

The outer member 62o of the outer cylinder 62 is disposed outward of the inner member 62i of the outer cylinder 62 in the vehicle width direction Dw. The outer member 62o of the outer cylinder 62 is recessed outward in the vehicle width direction Dw and the inner member 62i of the outer cylinder 62 is recessed inward in the vehicle width direction Dw. The outer member 63o and the inner member 63i of the inner cylinder 63 are disposed between the outer member 62o and the inner member 62i of the outer cylinder 62, The outer member 63o of the inner cylinder 63 is disposed outward of the inner member 63i of the inner cylinder 63 in the vehicle width direction Dw. The outer member 63o of the inner cylinder 63 is recessed outward in the vehicle width direction Dw and the inner member 63i of the inner cylinder 63 is recessed inward in the vehicle width direction Dw.

An outer surface of the outer cylinder 62 includes a flat portion 62f in which the downstream sensor 47 is inserted. The flat portion 62f extends obliquely upward such as to separate from the vehicle center WO (see FIG. 3) as an upper end of the outer cylinder 62 is approached. The flat portion 62f may extend obliquely upward such as to approach the vehicle center WO as the upper end of the outer cylinder 62 is approached or may be horizontal or vertical. The flat portion 62f extends in the axial direction Da of the upstream catalyst 55 from the front cap 64 (see FIG. 6) to the rear cap 65 (see FIG. 6). Travelling wind generated by forward movement of the scooter 1 flows rearward along the flat portion 62f included in an outer surface of the silencer 23. That is, the flat portion 62f is directly hit by the traveling wind.

As shown in FIG. 11, the support pipe 56 is inserted in a penetrating hole 63h, penetrating through the inner cylinder 63 in its thickness direction. The pedestal portion 83 is disposed inside the penetrating hole 63h. The pedestal portion 83 is exposed at a penetrating hole 62h, penetrating through the outer cylinder 62 in its thickness direction. The penetrating hole 62h of the outer cylinder 62 opens at the flat portion 62f of the outer surface of the outer cylinder 62. The penetrating hole 62h of the outer cylinder 62 is closed by the pedestal portion 83.

The downstream sensor 47 is inserted in the penetrating hole 62h, the penetrating hole 63h, and the insertion hole 83h. A large portion of the downstream sensor 47, that is, an exposed portion, from a bolt portion 47b, to which a tool that rotates the downstream sensor 47 is attached, to a connection portion 47c, contacting the downstream lead wire 49, is disposed outside the expansion portion 61 and is exposed to the traveling wind. As shown in FIG. 6, collision of the exposed portion of the downstream sensor 47 with the swing arm 11 is avoided by a housing recess 11r provided at the swing arm 11.

As shown in FIG. 11, the pedestal portion 83 of the support pipe 56 includes a flat outer surface 83o. The outer surface 83o of the pedestal portion 83 is overlapped with an inner surface of the outer cylinder 62. As shown in FIG. 12, the pedestal portion 83 contacts the outer cylinder 62 at all positions inside an annular region R1 surrounding the insertion hole 83h. In FIG. 12, the region in which the pedestal portion 83 and the outer cylinder 62 are in contact is indicated by cross hatching. The pedestal portion 83 is fixed to the outer cylinder 62 by welding. The downstream sensor 47 is supported by the outer cylinder 62 via the downstream nut 59 and the pedestal portion 83. The downstream sensor 47 is thereby held stably and vibration of the downstream sensor 47 is enabled to be reduced.

As described above, with the first preferred embodiment, the exhaust gas generated by the combustion of the fuel passes through the silencer 23 disposed at the side of the rear wheel Wr. The upstream catalyst 55 is housed in the silencer 23. The exhaust gas flowing through the silencer 23 is purified by the upstream catalyst 55. Cleanness of the exhaust gas discharged from the silencer 23 is thereby enabled to be improved. Further, the state of the exhaust gas purified by the upstream catalyst 55 is detected by the downstream sensor 47 supported by the support pipe 56 of the silencer 23. Degradation of the upstream catalyst 55 is thereby enabled to be detected.

The downstream sensor 47 is disposed close to the upstream catalyst 55. That is, the distance D1 in the axial direction Da of the upstream catalyst 55 from the upstream catalyst 55 to the downstream sensor 47 is shorter than the length L1 of the upstream catalyst 55 in the axial direction Da of the upstream catalyst 55. The silencer 23 is thus enabled to be made compact in the axial direction Da of the upstream catalyst 55 in comparison to a case where the distance D1 from the upstream catalyst 55 to the downstream sensor 47 is long. A peripheral length (length of a periphery) of the silencer 23 is enabled to be reduced because the downstream sensor 47 is provided at the support pipe 56 extending rearward from the upstream catalyst 55. The silencer 23 is thereby enabled to be made compact.

Further, the upstream catalyst 55 is not disposed in the exhaust pipe 21 that guides the exhaust gas from the engine 13 to the silencer 23 but is disposed inside the outer cylinder 62 of the silencer 23, A distance from the engine 13 to the upstream catalyst 55 is thereby increased, thus enabling a temperature of the exhaust gas flowing into the upstream catalyst 55 to be decreased. Further, the cross-sectional area of the support pipe 56 that supports the downstream sensor 47 is greater than the cross-sectional area of the upstream catalyst 55. The exhaust gas that passed through the upstream catalyst 55 expands inside the support pipe 56. The temperature of the exhaust gas thus decreases at the support pipe 56. The temperature of the exhaust gas contacting the downstream sensor 47 is thus enabled to be decreased further. Temperature rise of the downstream sensor 47 is thus enabled to be suppressed even if the downstream sensor 47 is disposed close to the upstream catalyst 55.

If the silencer 23 is enlarged upwardly and downwardly, it may ordinarily be considered to move the silencer 23 downward to secure a distance in the up/down direction from a rider or a passenger to the silencer 23. However, if the silencer 23 is disposed thus, the silencer 23 approaches the ground and thus a maximum banking angle of the scooter 1 decreases. Such a problem is thus enabled to be avoided in advance by preventing enlargement of the silencer 23.

With the present preferred embodiment, the downstream sensor 47 is inserted in the insertion hole 83h provided in the support pipe 56 and projects inward in the radial direction Dr of the upstream catalyst 55 from the insertion hole 83h. When the upstream catalyst 55 and the support pipe 56 are viewed from the rear in the axial direction Da of the upstream catalyst 55, the insertion hole 83h is disposed outside the periphery of the upstream catalyst 55. That is, a flow passage of the support pipe 56 projects outward in the radial direction Dr of the upstream catalyst 55 at the insertion hole 83h. The exhaust gas that passed through the upstream catalyst 55 is thereby enabled to expand at the support pipe 56.

Further, the insertion hole 83h, in which the downstream sensor 47 is inserted, is disposed in such a manner, so that the exhaust gas before expansion is unlikely to directly hit the pedestal portion 83 in which the insertion hole 83h is provided. Temperature rise of the pedestal portion 83 is thus enabled to be suppressed and a heat amount transmitted from the pedestal portion 83 to the downstream sensor 47 is enabled to be decreased. The temperature rise of the downstream sensor 47 is thereby enabled to be suppressed further and the temperature of the downstream sensor 47 is enabled to be maintained at no more than a limit temperature.

With the present preferred embodiment, the pedestal portion 83 that supports the downstream sensor 47 contacts the outer cylinder 62 of the silencer 23. Movement of the pedestal portion 83 with respect to the outer cylinder 62 is restricted by the outer cylinder 62 in contact with the pedestal portion 83. Vibration of the pedestal portion 83 that supports the downstream sensor 47 is thereby enabled to be reduced and the downstream sensor 47 is enabled to be held more stably. Sensing capability of the downstream sensor 47 is thus enabled to be stabilized further. Further, the pedestal portion 83 contacts the outer cylinder 62 that is directly hit by the traveling wind and heat of the downstream sensor 47 is thus enabled to be transmitted effectively to the outer cylinder 62. The temperature rise of the downstream sensor 47 is thereby enabled to be suppressed further.

With the present preferred embodiment, the pedestal portion 83 of the support pipe 56 contacts the outer cylinder 62 not just at a portion of the annular region R1 surrounding the insertion hole 83h but at all positions inside the region R1. The pedestal portion 83 is thus enabled to be stabilized with respect to the outer cylinder 62 in comparison to a case where the pedestal portion 83 contacts the outer cylinder 62 just at a portion of the annular region R1. The vibration of the downstream sensor 47 supported by the pedestal portion 83 is thereby enabled to be reduced further.

With the present preferred embodiment, the outer cylinder 62 of the silencer 23 is supported by the swing arm 11 via the brackets 69 fixed to each of the outer cylinder 62 and the swing arm 11. The pedestal portion 83 of the support pipe 56 that supports the downstream sensor 47 contacts the outer cylinder 62. The downstream sensor 47 is thus supported by the swing arm 11 via the support pipe 56, the outer cylinder 62, and the brackets 69. The vibration of the downstream sensor 47 is thus enabled to be reduced further.

With the present preferred embodiment, the downstream sensor 47 and the pedestal portion 83 supporting it are exposed at the penetrating hole 62h penetrating through the outer cylinder 62 in its thickness direction. Exposed portions of the downstream sensor 47 and the pedestal portion 83 contact the traveling wind that is lower in temperature than the exhaust gas. The downstream sensor 47 and the pedestal portion 83 are cooled by the traveling wind. Heat of the downstream sensor 47 and the pedestal portion 83 is thus enabled to be released efficiently to the atmosphere and the temperature rise of the downstream sensor 47 is enabled to be suppressed further.

With the present preferred embodiment, the penetrating hole 62h, penetrating through the outer cylinder 62 in its thickness direction, opens at the flat portion 62f provided at the outer surface of the outer cylinder 62. The traveling wind flows rearward along the outer surface of the outer cylinder 62. If the penetrating hole 62h opens at a bottom surface of a recess provided at the outer surface of the outer cylinder 62, the traveling wind is unlikely to hit a portion of the downstream sensor 47 positioned inside the recess. On the other hand, such a phenomenon does not occur if the penetrating hole 62h opens at the flat portion 62f of the outer surface of the outer cylinder 62. The exposed portion of the downstream sensor 47 that projects outward from the penetrating hole 62h of the outer cylinder 62 is thus enabled to be cooled effectively by the traveling wind.

Most of the exhaust gas that passed through the upstream catalyst 55 flows downstream in the axial direction Da of the upstream catalyst 55 from the upstream catalyst 55. The detecting portion 47d of the downstream sensor 47 and the upstream catalyst 55 are aligned in the axial direction Da of the upstream catalyst 55. When the upstream catalyst 55 and the downstream sensor 47 are viewed from the rear in the axial direction Da of the upstream catalyst 55, the detecting portion 47d of the downstream sensor 47 overlaps with the upstream catalyst 55. The exhaust gas immediately after passing through the upstream catalyst 55 is thus likely to hit the detecting portion 47d of the downstream sensor 47. The downstream sensor 47 takes in the exhaust gas from the inlet 47p, provided at the detecting portion 47d that corresponds to being a tip portion, and detects the state of the exhaust gas. The state of the exhaust gas immediately after passing through the upstream catalyst 55 is thereby enabled to be detected and the degradation of the upstream catalyst 55 is enabled to be sensed with higher precision.

With the present preferred embodiment, not just the upstream catalyst 55 but the downstream catalyst 57 is also housed in the silencer 23. The cleanness of the exhaust gas discharged from the silencer 23 is thereby enabled to be improved further. Further, the upstream catalyst 55 and the downstream catalyst 57 are aligned in the axial direction Da of the upstream catalyst 55 and when the upstream catalyst 55 and the downstream catalyst 57 are viewed from the rear in the axial direction Da of the upstream catalyst 55, the downstream catalyst 57 overlaps with at least a portion of the upstream catalyst 55. The silencer 23 is thus enabled to be made compact in the radial direction Dr of the upstream catalyst 55 in comparison to a case where the upstream catalyst 55 and the downstream catalyst 57 are not aligned in the axial direction Da of the upstream catalyst 55.

In addition, the downstream catalyst 57 is disposed downstream of the upstream catalyst 55 and the downstream sensor 47. In other words, the downstream sensor 47 is disposed at a position downstream of the upstream catalyst 55 and upstream of the downstream catalyst 57. Ordinarily, the temperature of the exhaust gas flowing into the upstream catalyst 55 is higher than the temperature of the exhaust gas flowing into the downstream catalyst 57 and a degradation rate of the upstream catalyst 55 is faster than a degradation rate of the downstream catalyst 57. The degradation of the upstream catalyst 55 is thereby enabled to be sensed early by disposing the downstream sensor 47 between the upstream catalyst 55 and the downstream catalyst 57 in a flow direction of the exhaust gas.

With the present preferred embodiment, the downstream catalyst 57 is disposed close to the upstream catalyst 55 and the interval between the two catalysts (the upstream catalyst 55 and the downstream catalyst 57) is narrow. That is, the distance D2 in the axial direction Da of the upstream catalyst 55 from the upstream catalyst 55 to the downstream catalyst 57 is shorter than the length L1 of the upstream catalyst 55 in the axial direction Da of the upstream catalyst 55. The interval between the two catalysts is thus narrow and therefore the two catalysts are enabled to be disposed inside the silencer 23 while suppressing enlargement of the silencer 23 in the axial direction Da of the upstream catalyst 55.

With the present preferred embodiment, the upstream end portion 56u of the support pipe 56 surrounds the upstream catalyst 55. In this case, a structure that fixes the upstream catalyst 55 and the support pipe 56 to each other is enabled to be simplified and the silencer 23 is enabled to be made compact and lightweight. In addition, the downstream end portion 56d of the support pipe 56 surrounds the downstream catalyst 57 and therefore a structure that fixes the downstream catalyst 57 and the support pipe 56 to each other is enabled to be simplified and enlargement and weight increase of the silencer 23 are enabled to be alleviated.

With the present preferred embodiment, the flow passage of the support pipe 56 bulges at the projection 82. The temperature of the exhaust gas that passed through the upstream catalyst 55 is thereby enabled to be decreased at the support pipe 56. Moreover, the pedestal portion 83 supporting the downstream sensor 47 is provided at the outer end of the projection 82 and the exhaust gas before expansion is unlikely to contact the pedestal portion 83. The heat amount transmitted from the pedestal portion 83 to the downstream sensor 47 is thereby enabled to be decreased.

### Other Preferred Embodiments

Although preferred embodiments have been described above, various modifications of the embodiments are possible.

The number of catalysts provided in the silencer 23 may be one or three or more. That is, the downstream catalyst 57 may be omitted.

The silencer 23 may be disposed to the left of the rear wheel Wr instead of to the right of the rear wheel Wr. If the straddled vehicle is provided with two rear wheels Wr, the silencer 23 may be disposed between the two rear wheels Wr. That is, it suffices that the silencer 23 and the rear wheels Wr be aligned in the vehicle width direction Dw.

At least one of either of the upstream sensor 46 and the downstream sensor 47 is not restricted to an oxygen sensor that detects the oxygen concentration in the exhaust gas and may be a temperature sensor that detects the temperature of the exhaust gas.

As long as a flow passage area of the support pipe 56 is greater than a flow passage area of the upstream catalyst 55, the insertion hole 83h of the support pipe 56 may overlap with the upstream catalyst 55 when viewed from the rear in the axial direction Da of the upstream catalyst 55.

The pedestal portion 83 may contact the outer cylinder 62 just at a portion of the annular region R1 surrounding the insertion hole 83h. The pedestal portion 83 may be separated from the outer cylinder 62 of the silencer 23. The pedestal portion 83 may contact the inner cylinder 63 of the silencer 23.

The pedestal portion 83 does not have to be exposed at the penetrating hole 62h of the outer cylinder 62. The penetrating hole 62h may open at a position besides the flat portion 62f.

The detection portion 47d of the downstream sensor 47 may be disposed outside the periphery of the upstream catalyst 55 when viewed from the rear in the axial direction Da of the upstream catalyst 55. That is, the detecting portion 47d of the downstream sensor 47 does not have to be overlapped with the upstream catalyst 55 when viewed from the rear in the axial direction Da of the upstream catalyst 55.

The interval between the upstream catalyst 55 and the downstream catalyst 57 may be equal to or longer than the length L1 of the upstream catalyst 55 in the axial direction Da of the upstream catalyst 55.

The support pipe 56 does not have to surround at least one of either of the upstream catalyst 55 and the downstream catalyst 57. That is, the support pipe 56 may be coupled to at least one of either of the upstream catalyst 55 and the downstream catalyst 57 via another member.

An entirety of the upstream catalyst 55 may be disposed inside the support pipe 56. A downstream end of the front pipe 51 may extend to an upstream end of the support pipe 56 and contact the support pipe 56. The front pipe 51 may be integral to the support pipe 56. An entirety of the downstream catalyst 57 may be disposed inside the support pipe 56.

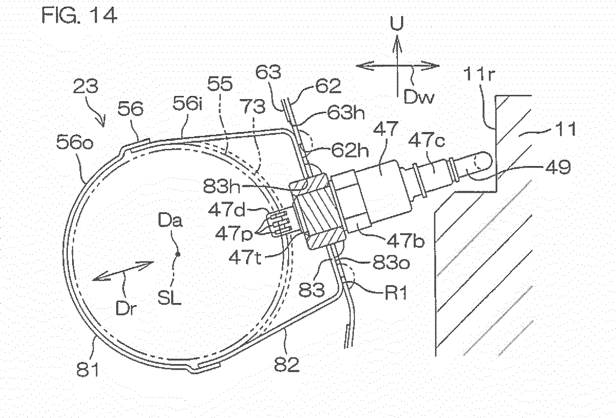

As shown in FIG. 14, the downstream lead wire 49 may pass through an interval between the silencer 23 and the swing arm 11 and a portion of the downstream lead wire 49 may be housed in the housing recess 11r of the swing arm 11 that is recessed inwardly in the vehicle width direction Dw. With the present arrangement, a flying object, such as a pebble, etc., that flies toward the downstream lead wire 49 is blocked by the swing arm 11. A portion of the downstream lead wire 49 is thereby enabled to be protected by the swing arm 11.

The swing arm 11 may include an overlapping portion, positioned in front of the downstream sensor 47 and overlapping with the downstream sensor 47 when the swing arm 11 is viewed from the front of the swing arm 11. With the present arrangement, a flying object, such as a pebble, etc., that flies toward the downstream sensor 47 is blocked by the overlapping portion of the swing arm 11. The downstream sensor 47 is thereby enabled to be protected by the swing arm 11.

The straddled vehicle may be a motorcycle other than the scooter 1. The straddled vehicle is not limited to a motorcycle, but may be a vehicle including not less than 3 wheels or an all-terrain vehicle,

Two or more arrangements among all the arrangements described above may be combined.

## Claims

1. A straddled vehicle (1) comprising:
an engine (13);
a rear wheel (Wr) configured to be driven by the engine (13);
a silencer (23) disposed at a side of the rear wheel (Wr) and for reducing an exhaust noise generated when exhaust gas, discharged from the engine (13), is released to atmosphere;
an exhaust pipe (21) extending from the engine (13) to the silencer (23) and for guiding the exhaust gas from the engine (13) to the silencer (23);
an upstream catalyst (55) housed in the silencer (23) and for purifying the exhaust gas flowing through the silencer (23); and
a downstream sensor (47) disposed downstream of the upstream catalyst (55) and configured to detect a state of the exhaust gas that has passed through the upstream catalyst (55); and wherein
the silencer (23) includes a front pipe (51) extending from the exhaust pipe (21) to the upstream catalyst (55), a support pipe (56) supporting the downstream sensor (47) and configured to guide downstream the exhaust gas that has passed through the upstream catalyst (55), and an outer cylinder (62) surrounding the upstream catalyst (55) and the support pipe (56),
**characterized in that**
a distance (D1) in an axial direction (Da) of the upstream catalyst (55) from the upstream catalyst (55) to the downstream sensor (47) is shorter than a length (L1) of the upstream catalyst (55) in the axial direction (Da) of the upstream catalyst (55), and
a cross-sectional area (S1, S2) of the support pipe (56) is greater than a cross-sectional area (S1) of the upstream catalyst (55).

2. The straddled vehicle (1) according to claim 1, wherein
the support pipe (56) includes an insertion hole (83h) in which the downstream sensor (47) is inserted, and
the insertion hole (83h) is disposed outside a periphery of the upstream catalyst (55) when viewed from the rear of the upstream catalyst (55) in the axial direction (Da) of the upstream catalyst (55).

3. The straddled vehicle (1) according to claim 2, wherein
the support pipe (56) further includes a pedestal portion (83) in which the insertion hole (83h) is provided, and
the pedestal portion (83) contacts the outer cylinder (62) of the silencer (23).

4. The straddled vehicle (1) according to claim 3, wherein the pedestal portion (83) contacts the outer cylinder (62) at all positions inside an annular region (R1) surrounding the insertion hole (83h).

5. The straddled vehicle (1) according to claim 3 or 4, wherein
the straddled vehicle (1) further comprises a swing arm (11) disposed between the rear wheel (Wr) and the silencer (23) in a vehicle width direction (Dw) and supporting the rear wheel (Wr), and
the silencer (23) further includes a bracket (69, 69u, 69r, 69L) fixed to each of the outer cylinder (62) and the swing arm (11).

6. The straddled vehicle (1) according to any one of claims 1 to 5, wherein
the support pipe (56) includes a pedestal portion (83) provided with an insertion hole (83h) in which the downstream sensor (47) is inserted,
the outer cylinder (62) includes a penetrating hole (62h) which extends from an outer surface of the outer cylinder (62) to an inner surface of the outer cylinder (62) and in which the downstream sensor (47) is inserted, and
the pedestal portion (83) is exposed at the penetrating hole (62h) of the outer cylinder (62).

7. The straddled vehicle (1) according to claim 6, wherein the outer surface of the outer cylinder (62) includes a flat portion (62f) at which the penetrating hole (62h) opens.

8. The straddled vehicle (1) according to any one of claims 1 to 7, wherein the downstream sensor (47) includes a detecting portion (47d) provided with an inlet (47p) for taking in the exhaust gas flowing through the silencer (23), and
the detecting portion (47d) of the downstream sensor (47) overlaps with the upstream catalyst (55) when viewed from the rear of the upstream catalyst (55) in the axial direction (Da) of the upstream catalyst (55).

9. The straddled vehicle (1) according to any one of claims 1 to 8, further comprising a downstream catalyst (57) that is housed in the silencer (23), is disposed downstream of the upstream catalyst (55) and the downstream sensor (47), and overlaps with at least a portion of the upstream catalyst (55) when viewed from the rear of the downstream catalyst (57) in the axial direction (Da) of the upstream catalyst (55).

10. The straddled vehicle (1) according to claim 9, wherein a distance (D2) in the axial direction (Da) of the upstream catalyst (55) from the upstream catalyst (55) to the downstream catalyst (57) is shorter than the length (L1) of the upstream catalyst (55) in the axial direction (Da) of the upstream catalyst (55).

11. The straddled vehicle (1) according to any one of claims 1 to 10, wherein the support pipe (56) includes an upstream end portion (56u) surrounding the upstream catalyst (55).

12. The straddled vehicle (1) according to claim 11, further comprising a downstream catalyst (57) housed in the silencer (23) and disposed downstream of the upstream catalyst (55) and the downstream sensor (47), and wherein
the support pipe (56) further includes a downstream end portion (56d) surrounding the downstream catalyst (57).

13. The straddled vehicle (1) according to any one of claims 1 to 12, further comprising:
a swing arm (11) disposed between the rear wheel (Wr) and the silencer (23) in a vehicle width direction (Dw) and supporting the rear wheel (Wr); and
a lead wire (49) connected to the downstream sensor (47) and passing through an interval between the silencer (23) and the swing arm (11) in the vehicle width direction (Dw), and wherein
the swing arm (11) includes a housing recess (11r) housing a portion of the lead wire (49).

## Patentansprüche

1. Spreizsitz-Fahrzeug (1), das umfasst:
einen Motor (13);
ein Hinterrad (Wr), das so eingerichtet ist, dass es von dem Motor (13) angetrieben wird;
einen Schalldämpfer (23), der an einer Seite des Hinterrades (Wr) angeordnet ist und dazu dient, ein Auspuffgeräusch zu verringern, das erzeugt wird, wenn von dem Motor (13) ausgestoßenes Abgas an die Atmosphäre abgeleitet wird;
ein Auspuffrohr (21), das sich von dem Motor (13) zu dem Schalldämpfer (23) erstreckt und dazu dient, dass Abgas von dem Motor (13) zu dem Schalldämpfer (23) zu leiten;
einen stromauf liegenden Katalysator (55), der in dem Schalldämpfer (23) aufgenommen ist und dazu dient, das durch den Schalldämpfer (23) strömende Abgas zu reinigen; sowie
einen stromab liegenden Sensor (47), der stromab von dem stromauf liegenden Katalysator (55) angeordnet und so eingerichtet ist, dass er einen Zustand des Abgases erfasst, das den stromauf liegenden Katalysator (55) durchlaufen hat; wobei
der Schalldämpfer (23) ein vorderes Rohr (51), das sich von dem Auspuffrohr (21) zu dem stromauf liegenden Katalysator (55) erstreckt, ein Trägerrohr (56), das den stromab liegenden Sensor (47) trägt und so eingerichtet ist, dass es das Abgas, das den stromauf liegenden Katalysator (55) durchlaufen hat, stromab leitet, sowie einen äußeren Zylinder (62) enthält, der den stromauf liegenden Katalysator (55) und das Trägerrohr (56) umschließt,
**dadurch gekennzeichnet, dass**
ein Abstand (D1) in einer axialen Richtung (Da) des stromauf liegenden Katalysators (55) von dem stromauf liegenden Katalysator (55) zu dem stromab liegenden Sensor (47) kürzer ist als eine Länge (L1) des stromauf liegenden Katalysators (55) in der axialen Richtung (Da) des stromauf liegenden Katalysators (55), und
eine Querschnittsfläche (S1, S2) des Trägerrohrs (56) größer ist als eine Querschnittsfläche (S1) des stromauf liegenden Katalysators (55).

2. Spreizsitz-Fahrzeug (1) nach Anspruch 1, wobei
das Trägerrohr (56) ein Einführungsloch (83h) enthält, in das der stromab liegende Sensor (47) eingeführt wird, und
das Einführungsloch (83h), von der Rückseite des stromauf liegenden Katalysators (55) in der axialen Richtung (Da) des stromauf liegenden Katalysators (55) aus gesehen, außerhalb eines Umfangs des stromauf liegenden Katalysators (55) angeordnet ist.

3. Spreizsitz-Fahrzeug (1) nach Anspruch 2, wobei:
das Trägerrohr (56) des Weiteren einen Sockelabschnitt (83) enthält, in dem sich das Einführungsloch (83h) befindet, und
der Sockelabschnitt (83) mit dem äußeren Zylinder (62) des Schalldämpfers (23) in Kontakt ist.

4. Spreizsitz-Fahrzeug (1) nach Anspruch 3, wobei der Sockelabschnitt (83) mit dem äußeren Zylinder (62) an allen Positionen innerhalb eines ringförmigen Bereiches (R1) in Kontakt ist, der das Einführungsloch (83h) umschließt.

5. Spreizsitz-Fahrzeug (1) nach Anspruch 3 oder 4, wobei
das Spreizsitz-Fahrzeug (1) des Weiteren eine Hinterradschwinge (11) aufweist, die zwischen dem Hinterrad (Wr) und dem Schalldämpfer (23) in einer Fahrzeug-Breitenrichtung (Dw) angeordnet ist und das Hinterrad (Wr) trägt, und
der Schalldämpfer (23) des Weiteren eine Halterung (69, 69u, 69r, 69L) enthält, die jeweils an dem äußeren Zylinder (62) und der Hinterradschwinge (11) befestigt ist.

6. Spreizsitz-Fahrzeug (1) nach einem der Ansprüche 1 bis 5, wobei
das Trägerrohr (56) einen Sockelabschnitt (83) enthält, der mit einem Einführungsloch (83h) versehen ist, in das der stromab liegende Sensor (47) eingeführt wird,
der äußere Zylinder (62) ein Durchgangsloch (62h) enthält, das sich von einer Außenfläche des äußeren Zylinders (62) zu einer Innenfläche des äußeren Zylinders(62) erstreckt und in das der stromab liegende Sensor (47) eingeführt wird, und
der Sockelabschnitt (83) an dem Durchgangsloch (62h) des äußeren Zylinders (62) freiliegt.

7. Spreizsitz-Fahrzeug (1) nach Anspruch 6, wobei die Außenfläche des äußeren Zylinders (62) einen flachen Abschnitt (62f) einschließt, an dem sich das Durchgangsloch (62h) öffnet.

8. Spreizsitz-Fahrzeug (1) nach einem der Ansprüche 1 bis 7, wobei der stromab liegende Sensor (47) einen Erfassungsabschnitt (47d) enthält, der mit einem Einlass (47p) zum Aufnehmen des durch den Schalldämpfer (23) strömenden Abgases versehen ist, und
der Erfassungsabschnitt (47d) des stromab liegenden Sensors (47) sich, von der Rückseite des stromauf liegenden Katalysators (55) in der axialen Richtung (Da) des stromauf liegenden Katalysators (55) aus gesehen, mit dem stromauf liegenden Katalysator (55) überlappt.

9. Spreizsitz-Fahrzeug (1) nach einem der Ansprüche 1 bis 8, das des Weiteren einen stromab liegenden Katalysator (57) umfasst, der in dem Schalldämpfer (23) aufgenommen ist, stromab von dem stromauf liegenden Katalysator (55) und dem stromab liegenden Sensor (47) angeordnet ist und sich, von der Rückseite des stromab liegenden Katalysators (57) in der axialen Richtung (Da) des stromauf liegenden Katalysators (55) aus gesehen, wenigstens mit einem Teil des stromauf liegenden Katalysators (55) überlappt.

10. Spreizsitz-Fahrzeug (1) nach Anspruch 9, wobei ein Abstand (D2) in der axialen Richtung (Da) des stromauf liegenden Katalysators (55) von dem stromauf liegenden Katalysator (55) zu dem stromab liegenden Katalysator (57) kürzer ist als die Länge (L1) des stromauf liegenden Katalysators (55) in der axialen Richtung (Da) des stromauf liegenden Katalysators (55).

11. Spreizsitz-Fahrzeug (1) nach einem der Ansprüche 1 bis 10, wobei das Trägerrohr (56) einen stromauf liegenden Endabschnitt (56u) aufweist, der den stromauf liegenden Katalysator (55) umschließt.

12. Spreizsitz-Fahrzeug (1) nach Anspruch 11, das des Weiteren einen stromab liegenden Katalysator (57) umfasst, der in dem Schalldämpfer (23) aufgenommen und stromab von dem stromauf liegenden Katalysator (55) sowie dem stromab liegenden Sensor (47) angeordnet ist, und wobei
das Trägerrohr (56) des Weiteren einen stromab liegenden Endabschnitt (56d) aufweist, der den stromab liegenden Katalysator (57) umschließt.

13. Spreizsitz-Fahrzeug (1) nach einem der Ansprüche 1 bis 12, das des Weiteren umfasst:
eine Hinterradschwinge (11), die zwischen dem Hinterrad (Wr) und dem Schalldämpfer (23) in einer Fahrzeug-Breitenrichtung (Dw) angeordnet ist und das Hinterrad (Wr) trägt; sowie
einen Zuleitungsdraht (49), der mit dem stromab liegenden Sensor (47) verbunden ist und einen Zwischenraum zwischen dem Schalldämpfer (23) und der Hinterradschwinge (11) in der Fahrzeug-Breitenrichtung (Dw) durchläuft, und wobei
die Hinterradschwinge (11) eine Aufnahmevertiefung (11r) enthält, die einen Teil des Zuleitungsdrahtes (49) aufnimmt.

## Revendications

1. Véhicule à selle (1) comprenant :
un moteur (13),
une roue arrière (Wr) configurée pour être entraînée par le moteur (13),
un pot d'échappement (23) disposé sur un côté de la roue arrière (Wr) et destiné à réduire le bruit d'échappement généré lorsque les gaz d'échappement, éjectés du moteur (13), sont libérés dans l'atmosphère,
une tubulure d'échappement (21) s'étendant depuis le moteur jusqu'au pot d'échappement (23) et destinée à guider les gaz d'échappement du moteur (13) jusqu'au pot d'échappement (23),
un catalyseur amont (55) logé dans le pot d'échappement (23) et destiné à purifier les gaz d'échappement circulant au travers du pot d'échappement (23), et
un capteur aval (47) disposé en aval du catalyseur amont (55) et configuré pour détecter l'état des gaz d'échappement qui ont traversé le catalyseur amont (55), et où
le pot d'échappement (23) inclut une tubulure avant (51) s'étendant depuis la tubulure d'échappement (21) jusqu'au catalyseur amont (55), une tubulure de support (56) soutenant le capteur aval (47) et configurée pour guider vers l'aval les gaz d'échappement qui ont traversé le catalyseur amont (55), ainsi qu'un cylindre externe (62) entourant le catalyseur amont (55) et la tubulure de support (56),
**caractérisé en ce que** :
la distance (D1) dans la direction axiale (Da) du catalyseur amont (55) depuis le catalyseur amont (55) jusqu'au capteur aval (47) est plus courte que la longueur (L1) du catalyseur amont (55) dans la direction axiale (Da) du catalyseur amont (55), et
la section transversale (S1, S2) de la tubulure de support (56) est plus grande que la section transversale (S1) du catalyseur amont (55).

2. Véhicule à selle (1) selon la revendication 1, dans lequel :
la tubulure de support (56) inclut un trou d'insertion (83h) dans lequel est inséré le capteur aval (47), et
le trou d'insertion (83h) est disposé à l'extérieur de la périphérie du catalyseur amont (55) lorsqu'on le regarde depuis l'arrière du catalyseur amont (55) dans la direction axiale (Da) du catalyseur amont (55).

3. Véhicule à selle (1) selon la revendication 2, dans lequel :
la tubulure de support (56) inclut en outre une partie formant montant (83) dans laquelle est prévu le trou d'insertion (83h), et
la partie formant montant (83) est en contact avec le cylindre externe (62) du pot d'échappement (23).

4. Véhicule à selle (1) selon la revendication 3, dans lequel la partie formant montant (83) est en contact avec le cylindre externe (62) à toutes les positions à l'intérieur d'une zone annulaire (R1) entourant le trou d'insertion (83h).

5. Véhicule à selle (1) selon la revendication 3 ou la revendication 4, où :
le véhicule à selle (1) comprend en outre un bras oscillant (11) disposé entre la roue arrière (Wr) et le pot d'échappement (23) dans la direction de la largeur du véhicule (Dw) et supportant la roue arrière (Wr), et
le pot d'échappement (23) inclut en outre un support (69, 69u, 69r, 69L) fixée à chacun du cylindre externe (62) et du bras oscillant (11).

6. Véhicule à selle (1) selon l'une quelconque des revendications 1 à 5, dans lequel :
la tubulure de support (56) inclut une partie formant montant (83) munie d'un trou d'insertion (83h) dans lequel est inséré le capteur aval (47),
le cylindre externe (62) inclut un trou de pénétration (62h) qui s'étend depuis la surface externe du cylindre externe (62) jusqu'à la surface interne du cylindre externe (62) et dans lequel est inséré le capteur aval (47), et
la partie formant montant (83) est exposée au niveau du trou de pénétration (62h) du cylindre externe (62).

7. Véhicule à selle (1) selon la revendication 6, dans lequel la surface externe du cylindre externe (62) inclut une partie plate (62f) au niveau de laquelle s'ouvre le trou de pénétration (62h).

8. Véhicule à selle (1) selon l'une quelconque des revendications 1 à 7, dans lequel le capteur aval (47) inclut un organe de détection (47d) doté d'un orifice d'entrée (47p) destiné à prélever les gaz d'échappement circulant au travers du pot d'échappement (23), et
l'organe de détection (47d) du capteur aval (47) chevauche le catalyseur amont (55) lorsqu'on le regarde depuis l'arrière du catalyseur amont (55) dans la direction axiale (Da) du catalyseur amont (55).

9. Véhicule à selle (1) selon l'une quelconque des revendications 1 à 8, comprenant en outre un catalyseur aval (57) qui est logé dans le pot d'échappement (23), qui est disposé en aval du catalyseur amont (55) et du capteur aval (47) et qui chevauche au moins une partie du catalyseur amont (55) quand on le regarde depuis l'arrière du catalyseur aval (57) dans la direction axiale (Da) du catalyseur amont (55).

10. Véhicule à selle (1) selon la revendication 9, dans lequel la distance (D2) dans la direction axiale (Da) du catalyseur amont (55) depuis le catalyseur amont (55) jusqu'au catalyseur aval (57) est plus courte que la longueur (L1) du catalyseur amont (55) dans la direction axiale (Da) du catalyseur amont (55).

11. Véhicule à selle (1) selon l'une quelconque des revendications 1 à 10, dans lequel la tubulure de support (56) inclut une partie terminale amont (56u) entourant le catalyseur amont (55).

12. Véhicule à selle (1) selon la revendication 11, comprenant en outre un catalyseur aval (57) logé dans le pot d'échappement (23) et disposé en aval du catalyseur amont (55) et du capteur aval (47), et où
la tubulure de support (56) inclut en outre une partie terminale aval (56d) entourant le catalyseur aval (57).

13. Véhicule à selle (1) selon l'une quelconque des revendications 1 à 12, comprenant en outre :
un bras oscillant (11) disposé entre la roue arrière (Wr) et le pot d'échappement (23) dans la direction de la largeur du véhicule (Dw) et supportant la roue arrière (Wr), et
un fil de connexion (49) relié au capteur aval (47) et traversant un intervalle entre le pot d'échappement (23) et le bras oscillant (11) dans la direction de la largeur du véhicule (Dw), et où
le bras oscillant (11) inclut un évidement de logement (11r) accueillant une partie du fil de connexion (49).
